# EUROPEAN PATENT SPECIFICATION

(11) **EP 4 675 579 B1**
(45) Date of publication and mention of the grant of the patent: **02.12.2026**
(21) Application number: 25186125.8
(22) Date of filing: 30.06.2025
(51) Int. Cl.: G06V 20/56

(54) **APPARATUS AND METHOD FOR DETERMINATION OF LOW VISIBILITY IN AN ENVIRONMENT AROUND A VEHICLE**
VORRICHTUNG UND VERFAHREN ZUR BESTIMMUNG EINER GERINGEN SICHTBARKEIT IN EINER UMGEBUNG UM EIN FAHRZEUG HERUM
APPAREIL ET PROCÉDÉ DE DÉTERMINATION DE FAIBLE VISIBILITÉ DANS UN ENVIRONNEMENT AUTOUR D'UN VÉHICULE

(30) Priority: 04.07.2024 US 202418764206
(43) Date of publication of application: 07.01.2026
(73) Proprietor: HERE Global B.V., 5611 ZT Eindhoven (NL)
(72) Inventor: AVERBUCH, Alex, Buffalo Grove (US); NAYAK, Amarnath, Mumbai (IN); RAUT, Advait Mohan, Mumbai (IN)
(74) Representative: Potter Clarkson

(56) References cited:
- US-A1- 2018 113 880
- US-A1- 2021 049 901
- US-A1- 2022 055 643
- US-A1- 2022 391 806
- US-A1- 2023 032 009
- SUN CHEN: "Operational Design Domain Monitoring and Augmentation for Autonomous Driving", MECHANICAL AND MECHATRONICS ENGINEERING THESES, 19 December 2022 (2022-12-19), Waterloo, Ontario, Canada, XP093063693, Retrieved from the Internet <URL:https://uwspace.uwaterloo.ca/handle/10012/18964> [retrieved on 20230713]

## Description

### TECHNOLOGICAL FIELD

The present disclosure generally relates to determining low visibility in a geographical area, and more specifically relates to an apparatus and a method for determining low visibility of an environment around a vehicle.

### BACKGROUND

Hazardous conditions significantly impact the safety of passengers driving on a road by increasing the likelihood and severity of accidents on a road. Such hazardous conditions include, but are not limited to, slippery roads, accidents, broken down vehicles, and low visibility conditions, for example, fog, mist, and the like. Additionally, the low visibility conditions may lead to challenges associated with a perception of an environment around a vehicle by a driver of the vehicle or a vehicle with autonomous capabilities. As a result of the low visibility conditions, the driver of the vehicle or the vehicle with autonomous capabilities may not be able to perceive other vehicles, obstacles, and the like, thereby increasing the likelihood of accidents. To mitigate the challenges associated with the hazardous conditions, various safety systems have been widely employed within the vehicle. Examples of such safety systems may include, but are not limited to, lane departure warning systems, forward collision warning systems, blind spot monitoring systems, rear cross-traffic alert systems, pedestrian detection systems, intersection assist systems, and cyclist detection systems. Such safety systems may be capable of detecting hazardous conditions, for example, low visibility conditions, and further alerting the driver of the vehicle about the hazardous conditions. By alerting the driver, the hazard warning systems may allow the driver of the vehicle or the vehicle with autonomous capabilities to take counter-measures to overcome the hazardous conditions. Such counter-measures include, but are not limited to, a speed control operation, a collision avoidance operation, and a vehicle diagnostics operation. However, specifications of such safety systems are limited, and consequently, such limitations lead to challenges in the implementation of the counter-measures. For example, a minimum range of which conventional safety systems are capable of detecting low visibility conditions is typically limited to 200 meters. However, in areas prone to dense fog or heavy rainfall, vehicles may require signals indicating low visibility at a range less than 200 meters from the vehicle to provide certain counter-measures. Sun Chen ("Operational Design Domain Monitoring and Augmentation for Autonomous Driving", Mechanical and Mechatronics Engineering Theses, 19 December 2022, XP093063693, Waterloo, Ontario, Canada) discloses an autonomous vehicle driving framework, in which map-matching is performed using a HD map of the geographic area in which the vehicle is travelling and images captured by the vehicle sensors such that detected lane markings are matched to lane markings in the HD map, and visibility information is determined for the purpose of issuing events related to environmental conditions.

Therefore, there is a need for determining low visibility of an environment around the vehicle to overcome the aforementioned challenges.

### BRIEF SUMMARY OF SOME EXAMPLE EMBODIMENTS

An apparatus, a method, and a computer programmable product are provided for implementing the process for determining low visibility of an environment around a vehicle.

In one aspect, an apparatus for the determination of low visibility in an environment around a vehicle is disclosed. The apparatus includes at least one processor and at least one non-transitory memory including computer program code instructions. The computer program code instructions are configured to, when executed, cause the apparatus to: obtain location information indicating a location of a vehicle; detect, by using a map database, a road segment satisfying a road attribute requirement proximate to the location based on the location information; obtain, from the map database, at least one attribute associated with the road segment; determine a position of the vehicle with respect to the road segment based on the at least one road attribute; acquire at least one image via at least one image capture sensor equipped by the vehicle based on the position; determine visibility information indicative of visibility of an environment around the vehicle based on the at least one image; and output the visibility information.

In some embodiments, the road segment is a first road segment. In such embodiments, to detect the first road segment, the computer program code instructions are configured to, when executed, cause the apparatus to: determine, by using the map database, an area captured within a first tile level based on the location information, wherein the area captured within the first tile level includes the location of the vehicle; determine a set of road segments within the area captured within the first tile level; determine a first attribute of each road segment of the set of road segments; assess the first attribute of each road segment of the set of road segments with the road attribute requirement; and responsive to the set of road segments including at least one road segment that satisfies the road attribute requirement, define a road segment among the set of road segments that satisfies the road attribute requirement and is closest to the location as the first road segment.

In some embodiments, the set of road segments is a first set of road segments. In such embodiments, to detect the first road segment, the computer program code instructions are configured to, when executed, cause the apparatus to, responsive to each road segment of the first set of road segments failing to satisfy the road attribute requirement: determine, by using the map database, an area captured within a second tile level based on the location information, wherein a resolution of the first tile level is greater than a resolution of the second tile level; determine a second set of road segments within the area captured within the second tile level; determine the first attribute of each road segment of the second set of road segments; assess the first attribute of each road segment of the second set of road segments with the road attribute requirement; and responsive to the second set of road segments including at least one road segment that satisfies the road attribute requirement, define a road segment among the second set of road segments that satisfies the road attribute requirement and is closest to the location as the first road segment.

In some embodiments, the first attribute is a road width, and the road attribute requirement requires a road width between a first width and a second width.

In some embodiments, the at least one attribute corresponds to a width of the road segment, a set of lanes within the road segment, a width of each lane of the set of lanes, a presence of a physical divider within the road segment, a width of the physical divider, or a combination thereof.

In some embodiments, to acquire the at least one image, the computer program code instructions are configured to, when executed, cause the apparatus to: determine a first distance between a first edge of the road segment and the vehicle based on the position of the vehicle with respect to the road segment; determine a second distance between a second edge of the road segment and the vehicle based on the position of the vehicle with respect to the road segment, wherein the second edge opposes the first edge; compare the first distance with the second distance; responsive to the first distance being greater than the second distance, acquire the at least one image via the at least one image capture sensor such that the at least one image indicates a view directed towards the first edge; and responsive to the second distance being greater than the first distance, acquire the at least one image via the at least one image capture sensor such that the at least one image indicates a view directed towards the second edge.

In some embodiments, the computer program code instructions are configured to, when executed, cause the apparatus to perform a lane-level map-matching to determine the position of the vehicle with respect to the road segment based on the at least one road attribute.

In some embodiments, the computer program code instructions are configured to, when executed, cause the apparatus to: (i) output the visibility information on a user interface; (ii) update a map layer stored in the map database to indicate the visibility information; (iii) based on the visibility information, cause the vehicle to control at least one vehicle-related function; or (iv) a combination thereof.

In some embodiments to determine the visibility information, the computer program code instructions are configured to, when executed, cause the apparatus to: apply a machine learning (ML) model on the at least one image; and determine the visibility information based on an output of the ML model, wherein the ML model is trained to detect an edge of the road segment in the at least one image.

In some embodiments, the visibility information indicates visibility up to a pre-determined distance from the vehicle.

In some embodiments, the computer program code instructions are configured to, when executed, cause the apparatus to: monitor for a visibility notification output from the vehicle, wherein the visibility notification is associated with the visibility of the environment around the vehicle; and responsive to detecting the visibility notification, obtain the location information.

In another aspect, a method for determining low visibility of an environment around a vehicle is disclosed. The method includes: obtaining location information indicating a location of a vehicle; detecting, by using a map database, an object proximate to the location of the vehicle based on the location information; acquiring at least one image via at least one image capture sensor equipped by the vehicle such that the at least one image indicates a view directed towards the object; determining visibility information indicative of visibility of an environment around the vehicle based on the at least one image; and outputting the visibility information.

In some embodiments, the object is a road marking, a road object, a traffic light, a utility pole, an advertisement structure, a building structure, or a road sign board, and wherein the visibility information indicates the visibility of the object from the vehicle.

In some embodiments, the object is a first object. In such embodiments, the detecting includes: determining, by using the map database, an area captured within a first tile level based on the location information, wherein the area captured within the first tile level includes the location of the vehicle; assessing the area captured within the first tile level to identify at least one object within the area captured within the first tile level; and responsive to the area captured within the first tile level including the at least one object within the area captured within the first tile level, define an object within the area captured within the first tile level that is proximate to the location as the first object.

In some embodiments, the detecting includes, responsive to the area captured within the first tile level excluding any object: determining, by using the map database, an area captured within a second tile level based on the location information, wherein the area captured within the second tile level includes the location of the vehicle; assessing the area captured within the second tile level to identify at least one object within the area captured within the second tile level; and responsive to the area captured within the second tile level including the at least one object, define an object within the area captured within the second tile level that is proximate to the location as the first object.

In some embodiments, the method further includes: monitoring for a visibility notification output from the vehicle, wherein the visibility notification is associated with the visibility of the environment around the vehicle; and responsive to detecting the visibility notification, obtaining the location information.

In some embodiments, the acquiring includes: determining, using the map database, a direction of the object with respect to the location of the vehicle; and controlling the at least one image capture sensor to capture the at least one image based on the direction.

In some embodiments, the method further includes: (i) outputting the visibility information on a user interface; (ii) updating a map layer stored in the map database to indicate the visibility information; (iii) based on the visibility information, causing the vehicle to control at least one vehicle-related function; or (iv) a combination thereof.

In some embodiments, the determining includes: applying a machine learning (ML) model on the at least one image; and determining the visibility information based on an output of the ML model, wherein the ML model is trained to detect the object in the at least one image.

In yet another aspect, a non-transitory computer-readable storage medium having computer program code instructions stored therein is disclosed. The computer program code instructions, when executed by at least one processor, cause the at least one processor to: obtain location information indicating a location of a vehicle; detect, by using a map database, a road segment satisfying a road attribute requirement proximate to the location based on the location information; obtain, from the map database, at least one attribute associated with the road segment; determine a position of the vehicle with respect to the road segment based on the at least one road attribute; acquire at least one image via at least one image capture sensor equipped by the vehicle based on the position; determine visibility information indicative of visibility of an environment around the vehicle based on the at least one image; and output the visibility information.

The foregoing summary is illustrative only and is not intended to be in any way limiting. In addition to the illustrative aspects, embodiments, and features described above, further aspects, embodiments, and features will become apparent by reference to the drawings and the following detailed description. The invention is set out in the appended claims.
The following numbered paragraphs are disclosed:
1. An apparatus comprising at least one processor and at least one non-transitory memory including computer program code instructions, the computer program code instructions configured to, when executed, cause the apparatus to:
   obtain location information indicating a location of a vehicle;
   detect, by using a map database, a road segment satisfying a road attribute requirement proximate to the location based on the location information;
   obtain, from the map database, at least one attribute associated with the road segment;
   determine a position of the vehicle with respect to the road segment based on the at least one road attribute;
   acquire at least one image via at least one image capture sensor equipped by the vehicle based on the position;
   determine visibility information indicative of visibility of an environment around the vehicle based on the at least one image; and
   output the visibility information.
2. The apparatus of paragraph 1, wherein the road segment is a first road segment, and wherein, to detect the first road segment, the computer program code instructions are configured to, when executed, cause the apparatus to:
   determine, by using the map database, an area captured within a first tile level based on the location information, wherein the area captured within the first tile level includes the location of the vehicle;
   determine a set of road segments within the area captured within the first tile level;
   determine a first attribute of each road segment of the set of road segments;
   assess the first attribute of each road segment of the set of road segments with the road attribute requirement; and
   responsive to the set of road segments including at least one road segment that satisfies the road attribute requirement, define a road segment among the set of road segments that satisfies the road attribute requirement and is closest to the location as the first road segment.
3. The apparatus of paragraph 2, wherein the set of road segments is a first set of road segments, and wherein, to detect the first road segment, the computer program code instructions are configured to, when executed, cause the apparatus to, responsive to each road segment of the first set of road segments failing to satisfy the road attribute requirement:
   determine, by using the map database, an area captured within a second tile level based on the location information, wherein a resolution of the first tile level is greater than a resolution of the second tile level;
   determine a second set of road segments within the area captured within the second tile level;
   determine the first attribute of each road segment of the second set of road segments;
   assess the first attribute of each road segment of the second set of road segments with the road attribute requirement; and
   responsive to the second set of road segments including at least one road segment that satisfies the road attribute requirement, define a road segment among the second set of road segments that satisfies the road attribute requirement and is closest to the location as the first road segment.
4. The apparatus of paragraph 3, wherein the first attribute is a road width, and wherein the road attribute requirement requires a road width between a first width and a second width.
5. The apparatus of paragraph 1, wherein the at least one attribute corresponds to a width of the road segment, a set of lanes within the road segment, a width of each lane of the set of lanes, a presence of a physical divider within the road segment, a width of the physical divider, or a combination thereof.
6. The apparatus of paragraph 1, wherein, to acquire the at least one image, the computer program code instructions are configured to, when executed, cause the apparatus to:
   determine a first distance between a first edge of the road segment and the vehicle based on the position of the vehicle with respect to the road segment;
   determine a second distance between a second edge of the road segment and the vehicle based on the position of the vehicle with respect to the road segment, wherein the second edge opposes the first edge;
   compare the first distance with the second distance;
   responsive to the first distance being greater than the second distance, acquire the at least one image via the at least one image capture sensor such that the at least one image indicates a view directed towards the first edge; and
   responsive to the second distance being greater than the first distance, acquire the at least one image via the at least one image capture sensor such that the at least one image indicates a view directed towards the second edge.
7. The apparatus of paragraph 1, wherein the computer program code instructions are configured to, when executed, cause the apparatus to perform a lane-level map-matching to determine the position of the vehicle with respect to the road segment based on the at least one road attribute.
8. The apparatus of paragraph 1, wherein the computer program code instructions are configured to, when executed, cause the apparatus to:
   (i) output the visibility information on a user interface;
   (ii) update a map layer stored in the map database to indicate the visibility information;
   (iii) based on the visibility information, cause the vehicle to control at least one vehicle-related function; or
   (iv) a combination thereof.
9. The apparatus of paragraph 1, wherein, to determine the visibility information, the computer program code instructions are configured to, when executed, cause the apparatus to:
   apply a machine learning (ML)model on the at least one image; and
   determine the visibility information based on an output of the ML model, wherein the ML model is trained to detect an edge of the road segment in the at least one image.
10. The apparatus of paragraph 9, wherein the visibility information indicates visibility up to a pre-determined distance from the vehicle.
11. The apparatus of paragraph 1, wherein the computer program code instructions are configured to, when executed, cause the apparatus to:
   monitor for a visibility notification output from the vehicle, wherein the visibility notification is associated with the visibility of the environment around the vehicle; and
   responsive to detecting the visibility notification, obtain the location information.
12. A method comprising:
   obtaining location information indicating a location of a vehicle;
   detecting, by using a map database, an object proximate to the location of the vehicle based on the location information;
   acquiring at least one image via at least one image capture sensor equipped by the vehicle such that the at least one image indicates a view directed towards the object;
   determining visibility information indicative of visibility of an environment around the vehicle based on the at least one image; and
   outputting the visibility information.
13. The method of paragraph 12, wherein the object is a road marking, a road object, a traffic light, a utility pole, an advertisement structure, a building structure, or a road sign board, and wherein the visibility information indicates the visibility of the object from the vehicle.
14. The method of paragraph 12, wherein the object is a first object, and wherein the detecting comprises:
   determining, by using the map database, an area captured within a first tile level based on the location information, wherein the area captured within the first tile level includes the location of the vehicle;
   assessing the area captured within the first tile level to identify at least one object within the area captured within the first tile level; and
   responsive to the area captured within the first tile level including the at least one object within the area captured within the first tile level, define an object within the area captured within the first tile level that is proximate to the location as the first object.
15. The method of paragraph 14, wherein the detecting comprises, responsive to the area captured within the first tile level excluding any object:
   determining, by using the map database, an area captured within a second tile level based on the location information, wherein the area captured within the second tile level includes the location of the vehicle;
   assessing the area captured within the second tile level to identify at least one object within the area captured within the second tile level; and
   responsive to the area captured within the second tile level including the at least one object, define an object within the area captured within the second tile level that is proximate to the location as the first object.
16. The method of paragraph 12, further comprising:
   monitoring for a visibility notification output from the vehicle, wherein the visibility notification is associated with the visibility of the environment around the vehicle; and
   responsive to detecting the visibility notification, obtaining the location information.
17. The method of paragraph 12, wherein the acquiring comprises:
   determining, using the map database, a direction of the object with respect to the location of the vehicle; and
   controlling the at least one image capture sensor to capture the at least one image based on the direction.
18. The method of paragraph 12, further comprising:
   (i) outputting the visibility information on a user interface;
   (ii) updating a map layer stored in the map database to indicate the visibility information;
   (iii) based on the visibility information, causing the vehicle to control at least one vehicle-related function; or
   (iv) a combination thereof.
19. The method of paragraph 12, wherein the determining comprises:
   applying a machine learning (ML)model on the at least one image; and
   determining the visibility information based on an output of the ML model, wherein the ML model is trained to detect the object in the at least one image.
20. A non-transitory computer-readable storage medium having computer program code instructions stored therein, the computer program code instructions, when executed by at least one processor, cause the at least one processor to:
   obtain location information indicating a location of a vehicle;
   detect, by using a map database, a road segment satisfying a road attribute requirement proximate to the location based on the location information;
   obtain, from the map database, at least one attribute associated with the road segment;
   determine a position of the vehicle with respect to the road segment based on the at least one road attribute;
   acquire at least one image via at least one image capture sensor equipped by the vehicle based on the position;
   determine visibility information indicative of visibility of an environment around the vehicle based on the at least one image; and
output the visibility information.

### BRIEF DESCRIPTION OF DRAWINGS

Having thus described example embodiments of the invention in general terms, reference will now be made to the accompanying drawings, which are not necessarily drawn to scale, and wherein:
FIG. 1 is a diagram that illustrates a network environment for determining low visibility of an environment around a vehicle, in accordance with an embodiment of the disclosure;
FIG. 2 illustrates a block diagram of the apparatus of FIG. 1, in accordance with an embodiment of the disclosure;
FIG. 3 is a block diagram that illustrates an exemplary first set of operations for determining low visibility of an environment around a vehicle, in accordance with an embodiment of the disclosure;
FIG 4 is a block diagram that illustrates an exemplary second set of operations for determining low visibility of an environment around a vehicle, in accordance with an embodiment of the disclosure;
FIG. 5 is a block diagram that illustrates training of the machine learning (ML)model for determining low visibility of an environment around a vehicle, in accordance with an embodiment of the disclosure;
FIG. 6 is a flowchart that illustrates an exemplary first method for determining low visibility of an environment around a vehicle, in accordance with an embodiment of the disclosure; and
FIG. 7 is a flowchart that illustrates an exemplary second method for determining low visibility of an environment around a vehicle, in accordance with an embodiment of the disclosure.

### DETAILED DESCRIPTION

In the following description, for purposes of explanation, numerous specific details are set forth in order to provide a thorough understanding of the present disclosure. It will be apparent, however, to one skilled in the art that the present disclosure may be practiced without these specific details. In other instances, systems and methods are shown in block diagram form only in order to avoid obscuring the present disclosure.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout. Also, reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments. As used herein, the terms "data," "content," "information," and similar terms may be used interchangeably to refer to data capable of being displayed, transmitted, received and/or stored in accordance with embodiments of the present
As defined herein, a "computer-readable storage medium," which refers to a non-transitory physical storage medium (for example, a volatile or non-volatile memory device), may be differentiated from a "computer-readable transmission medium," which refers to an electromagnetic signal.

The embodiments are described herein for illustrative purposes and are subject to many variations. It is understood that various omissions and substitutions of equivalents are contemplated as circumstances may suggest or render expedient but are intended to cover the application or implementation. Further, it is to be understood that the phraseology and terminology employed herein are for the description and should not be regarded as limiting. Any heading utilized within this description is for convenience only and has no legal or limiting effect.

The present disclosure may provide an apparatus, a method, and a computer programmable product for determining low visibility of an environment around a vehicle. The disclosed apparatus and the method provide techniques for determining the low visibility of the environment around the vehicle that is traveling on a road segment. The techniques disclosed in the present disclosure may use a machine learning model to determine visibility information indicative of the visibility of the environment around the vehicle. The machine learning models may determine the visibility information based on at least one image of the environment around the vehicle. The at least one image may be acquired via at least one image capture sensor equipped by the vehicle. Further, the machine learning model may be able to dynamically determine the visibility information.

The disclosed apparatus may further communicate with a map database to update the visibility information on a particular road in real time to inform other users about the visibility on the road. Specifically, the disclosed apparatus may determine the visibility information dynamically when a vehicle is traveling on a road segment. Moreover, the disclosed apparatus and method may be configured to alert the user of the vehicle about the visibility on the road, using visual and/or audio alerts. This way, the user may be aware of the visibility of the environment in front of them. The apparatus and method may also communicate the visibility information with other vehicles traveling on the same road segment. Also, the disclosed apparatus may communicate with a cruise control system of the vehicle to automatically navigate on the road segment based on the visibility information.

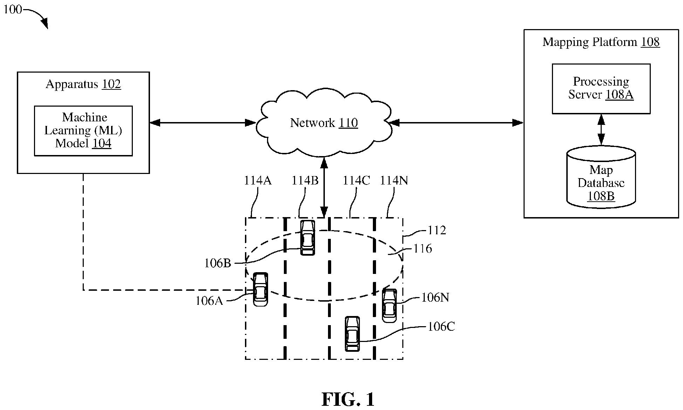

FIG. 1 is a diagram that illustrates a network environment 100 for determining low visibility in an environment around a vehicle, in accordance with an embodiment of the disclosure. With reference to FIG. 1, there is shown a diagram of the network environment 100. The network environment 100 includes an apparatus 102 that may include a machine learning (ML) model 104. Further, there is shown a set of vehicles that may include a first vehicle 106A, a second vehicle 106B, a third vehicle 106C, up to an Nth vehicle 106N. With reference to FIG. 1, there is further shown a mapping platform 108, and a network 110. The mapping platform 108 may include a processing server 108A and a map database 108B. The set of vehicles may be traveling on road segment 112. The road segment 112 may include a set of lane segments 114. The set of lane segments 114 may include a first lane segment 114A, a second lane segment 114B, a third lane segment 114C, up to an Nth lane segment 114N. In an embodiment, the apparatus 102 may be associated with the first vehicle 106A. In another embodiment, the apparatus 102 may be integrated within the first vehicle 106A. In some embodiments, the at least one image capture sensor (not shown) may be integrated within the first vehicle 106A to acquire at least one image of an environment 116 around the corresponding vehicle of the set of vehicles.

The apparatus 102 may include suitable logic, circuitry, interfaces, and/or code that may be configured to determine visibility information indicative of the visibility of the environment 116 around the first vehicle 106A. Specifically, the apparatus 102 may be configured to determine the visibility information based on the acquired at least one image of the environment 116 around the first vehicle 106A. The visibility information may indicate visibility up to a pre-determined distance from the first vehicle 106A. Examples of the pre-determined distance may include, but are not limited to, 50 meters, 100 meters, and 150 meters. Examples of the apparatus 102 may include, but are not limited to, an electronic control unit (ECU), an electronic control module (ECM), a computing device, a mainframe machine, a server, a computer workstation, any and/or any other device with visibility determination operations.

In an example embodiment, the apparatus 102 may be on-boarded by the first vehicle 106A, such as the apparatus 102 may be a visibility determination system installed in the first vehicle 106A for determining the visibility of the environment 116 around the first vehicle 106A. In another example embodiment, the apparatus 102 may be the processing server 108A of the mapping platform 108 and therefore may be co-located with or within the mapping platform 108.

In another embodiment, the apparatus 102 may be embodied as a cloud-based service, a cloud-based application, a cloud-based platform, a remote server-based service, a remote server-based application, a remote server-based platform, or a virtual computing system. In yet another example embodiment, the apparatus 102 may be an OEM (Original Equipment Manufacturer) cloud. The OEM cloud may be configured to anonymize any data received by the apparatus 102, such as from a set of road attributes, before using the data for further processing, such as before sending the data to the ML model 104 (or to the map database 108B). For an example, anonymization of the data may be done by the mapping platform 108.

Each vehicle of the set of vehicles may be a non-autonomous vehicle, a semi-autonomous vehicle, or a fully autonomous vehicle, for example, as defined by National Highway Traffic Safety Administration (NHTSA). Examples of each vehicle of the set of vehicles may include, but are not limited to, a two-wheeler vehicle, a three-wheeler vehicle, a four-wheeler vehicle, more than a four-wheeler vehicle, a hybrid vehicle, or a vehicle with autonomous drive capability that uses one or more distinct renewable or non-renewable power sources. The vehicle that uses renewable or non-renewable power sources may include a fossil fuel-based vehicle, an electric propulsion-based vehicle, a hydrogen fuel-based vehicle, a solar-powered vehicle, and/or a vehicle powered by other forms of alternative energy sources. Each vehicle of the set of vehicles may be a system through which an occupant (for example a rider) may travel from a start point to a destination point. Examples of the two-wheeler vehicle may include, but are not limited to, an electric two-wheeler, an internal combustion engine (ICE)-based two-wheeler, or a hybrid two-wheeler. Similarly, examples of the four-wheeler vehicle may include, but are not limited to, an electric car, an internal combustion engine (ICE)-based car, a fuel-cell-based car, a solar powered-car, or a hybrid car. It may be noted here that the four-wheeler diagram of each of the set of vehicles are merely shown as examples in FIG. 1. The present disclosure may also be applicable to other structures, designs, or shapes of each of the set of vehicles. The description of other types of vehicles and respective structures, designs, or shapes has been omitted from the disclosure for the sake of brevity.

In some example embodiments, each vehicle of the set of vehicles may include processing means such as a central processing unit (CPU), storage means such as on-board read-only memory (ROM), random access memory (RAM), acoustic sensors such as a microphone array, position sensors such as a global positioning system (GPS) sensor, gyroscope, a light detection and ranging (LiDAR) sensor, a proximity sensor, motion sensors such as an accelerometer, an image sensor such as a camera, a display enabled user interface such as a touch screen display, and other components as may be required for specific functionalities of each vehicle of the set of vehicles. In some example embodiments, the user equipment may be associated, coupled, or otherwise integrated with the set of vehicles, such as an advanced driver assistance system (ADAS), a personal navigation device (PND), a portable navigation device, and/or other devices that may be configured to provide route guidance and navigation-related functions to the user.

The mapping platform 108 may comprise suitable logic, circuitry, and interfaces that may be configured to store one or more map attributes and sensor data associated with traffic on link segments. The mapping platform 108 may be configured to store and update map data indicating the traffic data along with other map attributes, road attributes, and traffic entities, in the map database 108B. The mapping platform 108 may include techniques related to, but not limited to, geocoding, routing (multimodal, intermodal, and unimodal), clustering algorithms, machine learning in location-based solutions, natural language processing algorithms, and artificial intelligence algorithms. Data for different modules of the mapping platform 108 may be collected using a plurality of technologies including, but not limited to drones, sensors, connected cars, cameras, probes, and chipsets. In some embodiments, the mapping platform 108 may be embodied as a chip or chip set. In other words, the mapping platform 108 may comprise one or more physical packages (such as chips) that include materials, components, and/or wires on a structural assembly (such as a baseboard).

In some example embodiments, the mapping platform 108 may include the processing server 108A for carrying out the processing functions associated with the mapping platform 108 and the map database 108B for storing map data. In an embodiment, the processing server 108A may include one or more processors configured to process requests received from the apparatus 102. The processors may fetch sensor data and/or map data from the map database 108B and transmit the same to the apparatus 102 in a format suitable for use by the apparatus 102.

Continuing further, the map database 108B may comprise suitable logic, circuitry, and interfaces that may be configured to store the sensor data and map data, which may be collected from the at least one image capture sensor and/or the first vehicle 106A. In an embodiment, the first vehicle 106A may be traveling on the first lane segment 114A of the road segment 112, or in a region close to the first lane segment 114A. In accordance with an embodiment, such sensor data may be updated in real-time or near real-time such as within a few seconds, a few minutes, or on an hourly basis, to provide accurate and up-to-date sensor data. The sensor data may be collected from any sensor that may inform the mapping platform 108 or the map database 108B of features within the environment 116 that are appropriate for traffic-related services. In accordance with an embodiment, the sensor data may be collected from any sensor that may inform the mapping platform 108 or the map database 108B of features within the environment 116 that are appropriate for mapping. For example, motion sensors, inertia sensors, image capture sensors, proximity sensors, LiDAR sensors, and ultrasonic sensors may be used to collect the sensor data. The gathering of massive quantities of crowd-sourced data may facilitate the accurate modeling and mapping of an environment, whether it is a road link or a link within a structure, such as in an interior of a multi-level parking structure.

The map database 108B may further be configured to store the traffic-related data and road topology and geometry-related data for a road network as map data. The map data may also include cartographic data, routing data, and maneuvering data. The map data may also include, but is not limited to, locations of intersections, diversions to be caused due to accidents, congestions or constructions, suggested roads, or links to avoid, and an estimated time of arrival (ETA) depending on different links. In accordance with an embodiment, the map database 108B may be configured to receive the map data including the road topology and geometry-related attributes related to the road network from external systems, such as one or more of background batch data services, streaming data services, and third-party service providers, via the network 110.

In accordance with an embodiment, the map data stored in the map database 108B may further include data about changes in traffic situations registered by GPS provider(s), such as, but not limited to, incidents, road repairs, heavy rains, snow, fog, time of day, day of a week, holiday or other events which may influence the traffic condition of a link segment.

In some embodiments, the map database 108B may further store historical probe data for events (such as, but not limited to, traffic incidents, construction activities, scheduled events, and unscheduled events) associated with Point of Interest (POI) data records or other records of the map database 108B.

For example, the data stored in the map database 108B may be compiled (such as into a platform specification format (PSF)) to organize and/or processed for generating navigation-related functions and/or services, such as route calculation, route guidance, map display, speed calculation, distance and travel time functions, navigation instruction generation, and other functions, by a navigation device, such as a user equipment. The navigation-related functions may correspond to vehicle navigation, pedestrian navigation, navigation to a favored parking spot, or other types of navigation. While example embodiments described herein generally relate to vehicular travel, example embodiments may be implemented for bicycle travel along bike paths, boat travel along maritime navigational routes, etc. The compilation to produce the end-user databases may be performed by a party or entity separate from the map developer. For example, a customer of the map developer, such as a navigation device developer or other end user device developer, may perform compilation on the received map database 108B in a delivery format to produce one or more compiled navigation databases.

In some embodiments, the map database 108B may be a master geographic database configured on the side of the apparatus 102. In accordance with an embodiment, the map database 108B may represent a compiled navigation database that may be used in or with end-user devices to provide navigation instructions based on the traffic data, the traffic conditions, speed adjustment, ETAs, and/or map-related functions to navigate through the intersection connected links on the route.

In some embodiments, the map data may be collected by end-user vehicles (such as the first vehicle 106A) which use vehicles on-board one or more sensors to detect data about various entities such as road objects, lane markings, links, and the like. These vehicles are also referred to as probe vehicles and form an alternate form of data source for map data collection, along with ground truth data. Additionally, data collection mechanisms like remote sensing, such as aerial or satellite photography may be used to collect the map data for the map database 108B.

For an example, the map database 108B may include lane and intersection data records or other data that may represent links in the route, pedestrian lane, or areas in addition to or instead of the vehicle lanes. The lanes and intersections may be associated with attributes, such as geographic coordinates, street names, lane identifiers, lane segment identifiers, lane traffic direction, address ranges, speed limits, turn restrictions at intersections, and other navigation-related attributes, as well as POIs, such as fueling stations, hotels, restaurants, museums, stadiums, offices, auto repair shops, buildings, stores, and parks. The map database 108B may additionally include data about places, such as cities, towns, or other communities, and other geographic features such as, but not limited to, bodies of water, and mountain ranges.

In some example embodiments, images received from the image source, for example, the at least one image capture sensor may be stored within the map database 108B of the mapping platform 108. In certain cases, the mapping platform 108, using the processing server 108A, may suitably process the received images. For example, such processing may include, suitably labeling the images based on corresponding associated lane and/or link, point of interest within the link and/or lane, and other information relating to the respective link and/or lane. Such labeled images may then be stored within the map database 108B as map data.

The ML model 104 may be trained to identify a relationship between inputs, such as a set of features in a training dataset, and output predictive values. The ML model 104 may be defined by its hyper-parameters, for example, a number of weights, cost function, input size, number of layers, and the like. The hyper-parameters of the ML model 104 may be tuned and weights may be updated to move towards a global minima of a cost function for the corresponding ML model. After several epochs of the training on the feature information in the training dataset, the ML model 104 may be trained to output a prediction result for a set of inputs. The prediction result may be indicative of the visibility of the environment 116 around the first vehicle 106A.

The ML model 104 may include electronic data, such as, for example, a software program, code of the software program, libraries, applications, scripts, or other logic or instructions for execution by a processing device, such as the apparatus 102. The ML model 104 may include code and routines configured to enable a computing device, such as the apparatus 102 to perform one or more operations for determination of the visibility information indicative of the visibility of the environment 116 around the first vehicle 106A. Specifically, the ML model 104 may be trained to output the visibility information. Additionally, or alternatively, the ML model 104 may be implemented using hardware including a processor, a microprocessor (e.g., to perform or control the performance of one or more operations), a field-programmable gate array (FPGA), or an application-specific integrated circuit (ASIC). Alternatively, in some embodiments, the ML model 104 may be implemented using a combination of hardware and software. Examples of the ML model 104 may include, but are not limited to, a Deep Neural Network (DNN), an Artificial Neural Network (ANN), a Long Short-Term Memory (LSTM) network (ANN-LSTM), a Convolutional Neural Network (CNN), a CNN-Recurrent Neural Network (RNN), a Connectionist Temporal Classification (CTC) model, or a Hidden Markov Model. In some embodiment, the apparatus 102 may include a plurality of ML models to determine the visibility information indicative of visibility of the environment 116 around the first vehicle 106A based on the acquired at least one image of the environment 116.

The apparatus 102 may be communicatively coupled to the each vehicle of the set of vehicles, and the mapping platform 108, via the network 110. In an embodiment, the apparatus 102 may be communicatively coupled to other components not shown in FIG. 1 via the network 110. All the components in the network environment 100 may be coupled directly or indirectly to the network 110. The components described in the network environment 100 may be further broken down into more than one component and/or combined together in any suitable arrangement. Further, one or more components may be rearranged, changed, added, and/or removed.

The network 110 may be wired, wireless, or any combination of wired and wireless communication networks, such as cellular, Wi-Fi, internet, local area networks, or the like. In some embodiments, the network 110 may include one or more networks such as a data network, a wireless network, a telephony network, or any combination thereof. It is contemplated that the data network may be any local area network (LAN), metropolitan area network (MAN), wide area network (WAN), a public data network (e.g., the Internet), short-range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks (e.g. LTE-Advanced Pro), 5G New Radio networks, international telecommunication union (ITU) -international mobile communications (IMT) 2020 networks, code division multiple access (CDMA), wideband code division multiple access (WCDMA), wireless fidelity (Wi-Fi), wireless LAN (WLAN), Bluetooth, Internet Protocol (IP) data casting, satellite, mobile ad-hoc network (MANET), and the like, or any combination thereof.

The embodiments disclosed herein address the aforementioned problems related to determining visibility of the environment 116 around the first vehicle 106A when the first vehicle 106A is being driven on the road segment 112. In an embodiment, driving the first vehicle 106A in low visibility may lead to problems associated with a perception of the environment 116 by the driver of the first vehicle 106A and/or the first vehicle 106A with autonomous driving capability. In an embodiment, as a result of the low visibility in the environment 116 of the first vehicle 106A, the driver may be unable to perceive other vehicles of the set of vehicles, for example, the second vehicle 106B, pedestrians, and obstacles on the road segment 112, thereby increasing a likelihood of accidents.

In an alternate embodiment, the first vehicle 106A with autonomous driving capabilities may navigate the road segment 112 based on real-time data and environmental conditions associated with the environment 116 of the first vehicle 106A. The low visibility in environment 116 of the first vehicle 106A may increase the computational complexity associated with the autonomous driving of the first vehicle 106A and navigation errors during the autonomous driving of the first vehicle 106A on road segment 112. Additionally or alternatively, the low visibility in the environment 116 of the first vehicle 106A may decrease the accuracy associated with a mapping of the first vehicle 106A on the mapping platform 108, affecting navigation and route planning. To overcome the above-mentioned problems, the aforementioned apparatus 102 is disclosed.

In operation, a user of the first vehicle 106A may be planning to navigate from a first location to a second location using the first vehicle 106A during foggy weather conditions. The foggy weather conditions may reduce the visibility of the environment 116 around the first vehicle 106A, thereby increasing the likelihood of accidents. In order to navigate safely from the first location to the second location, the apparatus 102 may be configured to determine visibility information indicative of visibility of the environment 116 around the first vehicle 106A based on at least one image of the environment 116. Additionally or alternatively, based on the reception of the determined visibility information, the apparatus 102 may be configured to cause the first vehicle 106A to control at least one vehicle-related function. The at least one vehicle-related function may include, but are not limited to, a navigation function, a speed control function, a collision avoidance function, and a vehicle diagnostics function. In an embodiment, the visibility information indicative of the visibility of the environment 116 around the first vehicle 106A may be determined based on an application of the ML model 104 on the at least one image of the environment 116.

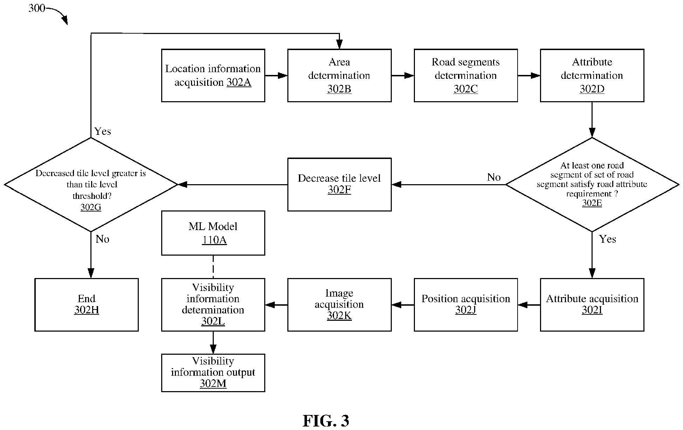

The apparatus 102 may be configured to output the determined visibility information. In an embodiment, the apparatus 102 may be configured to output the determined visibility information on a user interface associated with the first vehicle 106A. In another embodiment, the apparatus 102 may be configured to generate a virtual object that may be indicative of the determined visibility information and output the generated virtual object on the user interface associated with the first vehicle 106A. In another embodiment, the apparatus 102 may be configured to render an audio output indicative of the determined visibility information. Details of outputting the determined visibility information are provided, for example, in FIGs. 3, 4, and 5.

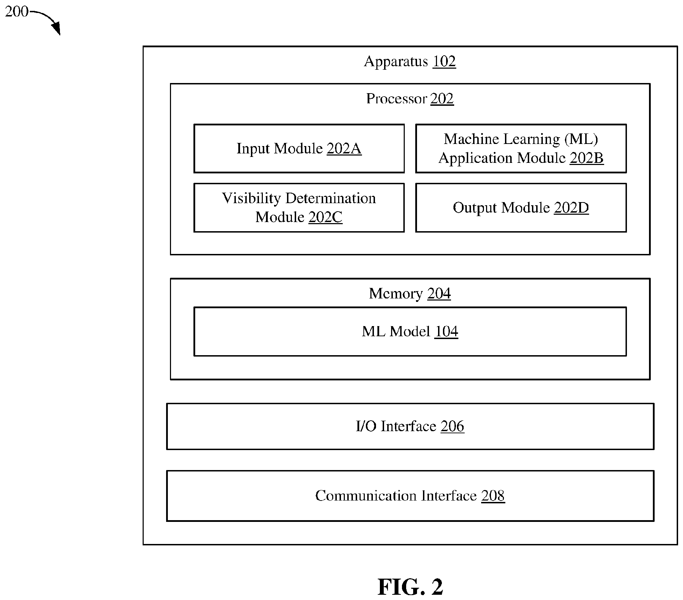

FIG. 2 illustrates a block diagram 200 of the apparatus of FIG. 1, in accordance with an embodiment of the disclosure. FIG. 2 is explained in conjunction with FIG. 1. In FIG. 2, there is shown the block diagram 200 of the apparatus 102. The apparatus 102 may include at least one processor 202 (referred to as a processor 202, hereinafter), at least one non-transitory memory 204 (referred to as a memory 204, hereinafter), an input/output (I/O) interface 206, and a communication interface 208. The processor 202 may comprise modules, depicted as, an input module 202A, an ML application module 202B, a visibility determination module 202C, and an output module 202D. The apparatus 102 may be connected to the memory 204, and the I/O interface 206 through wired or wireless connections. Although FIG. 2 illustrates that the apparatus 102 includes the processor 202, the memory 204, and the I/O interface 206 , the disclosure may not be so limiting, and the apparatus 102 may include fewer or more components to perform the same or other functions of the apparatus 102. In an embodiment, the input module 202A, and the output module 202D may be integrated within the I/O interface 206. In some embodiments, the input module 202A may receive input data (such as user inputs), and the output module 202D may output processed data (such as the visibility information, the virtual object, and the like) via the I/O interface 206.

In accordance with an embodiment, the apparatus 102 may store data that may be generated by the modules while performing corresponding operations or may be retrieved from a database associated with the apparatus 102, such as the map database 108B, in the memory 204. For example, the data may include vehicle information, traffic information, user information, distance information, and environmental information.

The processor 202 of the apparatus 102 may be configured to determine the visibility information, and output the determined visibility information. The processor 202 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application-specific integrated circuit), an FPGA (field programmable gate array), a microcontroller unit (MCU), a hardware accelerator, a special-purpose computer chip, or the like. As such, in some embodiments, the processor 202 may include one or more processing cores configured to perform independently. A multi-core processor may enable multiprocessing within a single physical package. Additionally, or alternatively, the processor 202 may include one or more processors configured in tandem via the bus to enable independent execution of instructions, pipelining, and/or multithreading. Additionally, or alternatively, the processor 202 may include one or more processors capable of processing large volumes of workloads and operations to provide support for big data analysis. In an example embodiment, the processor 202 may be in communication with the memory 204 via a bus for passing information among components of the apparatus 102.

In an example, when the processor 202 may be embodied as an executor of software instructions, the instructions may specifically configure the processor 202 to perform the algorithms and/or operations described herein when the instructions are executed. However, in some cases, the processor 202 may be a processor-specific device (for example, a mobile terminal or a fixed computing device) configured to employ an embodiment of the present disclosure by further configuration of the processor 202 by instructions for performing the algorithms and/or operations described herein. The processor 202 may include, among other things, a clock, an arithmetic logic unit (ALU), and logic gates configured to support the operation of the processor 202. The network environment 100 may be accessed using the communication interface 208 of the apparatus 102. The communication interface 208 may provide an interface for accessing various features and data stored in the apparatus 102.

In some embodiments, the processor 202 may be configured to provide Internet-of-Things (IoT) related capabilities to users of the apparatus 102 disclosed herein. The IoT-related capabilities may in turn be used to provide smart city solutions by providing visibility information, real-time warnings, big data analysis, and sensor-based data collection by using the cloud-based mapping system for providing accurate navigation instructions and ensuring driver safety. The I/O interface 206 may provide an interface for accessing various features and data stored in the apparatus 102.

The input module 202A of the processor 202 may be configured to obtain location information indicating the location of the first vehicle 106A. In an embodiment, the location information may be obtained from the one or more sensors. In an embodiment, the one or more sensors may be associated with the first vehicle 106A. In another embodiment, the one or more sensors may be associated with each vehicle of the set of vehicles. In another example, the one or more sensors may be installed in the vicinity of the set of lane segments 114 to obtain sensor data that may include the location information. For example, the one or more sensors may include one or more image sensors, one or more LIDARs, one or more speed sensors, one or more global positioning sensors (GPS), and the like.

The ML application module 202B of the processor 202 may be configured to apply the ML model 104 on the acquired at least one image of the environment 116. In an embodiment, the ML model 104 may be trained to detect an edge of the road segment 112 in the at least one image of the environment 116. In another embodiment, the ML model 104 may be trained to ML model is trained to detect at least one object in the at least one image of the environment 116.

The visibility determination module 202C of the processor 202 may be configured to determine the visibility information indicative of the visibility of the environment 116 around the first vehicle 106A. In an embodiment, the visibility determination module 202C of the processor 202 may be configured to determine the visibility information based on an output of the first ML model.

The output module 202D of the processor 202 may be configured to output the visibility information indicative of the visibility of the environment 116 around the first vehicle 106A. In an embodiment, the output module 202D may be configured to generate one or more virtual objects indicating the visibility information. In another embodiment, the output module 202D may be configured to audio alerts informing about the visibility around the first vehicle 106A. The output module 202D may be further configured to output the generated virtual object and the audio alerts on the I/O interface 206 of the apparatus 102. In another embodiment, the output module 202D of the processor 202 may be configured to transmit the visibility information to the map database 108B. In another embodiment, the output module 202D of the processor 202 may be configured to control the maneuver of the first vehicle 106A to navigate safely on the road segment 112 during low visibility conditions, for example, the fog, heavy rainfall, and the like.

The memory 204 of the apparatus 102 may be configured to store the set of attributes, the location information, and the visibility information. The memory 204 of the apparatus 102 may be configured to store a navigation route of the first vehicle 106A, a user command associated the at least one vehicle-related function, and the virtual object. In an embodiment, the memory 204 may be configured to store the ML model 104. The memory 204 may be non-transitory and may include, for example, one or more volatile and/or non-volatile memories. In other words, for example, the memory 204 may be an electronic storage device (for example, a computer readable storage medium) comprising gates configured to store data (for example, bits) that may be retrievable by a machine (for example, a computing device like the processor 202). The memory 204 may be configured to store information, data, content, applications, instructions, or the like, for enabling the apparatus 102 to carry out various functions in accordance with an example embodiment of the present disclosure. For example, the memory 204 may be configured to buffer input data for processing by the processor 202. As exemplarily illustrated in FIG. 2, the memory 204 may be configured to store instructions for execution by the processor 202. As such, whether configured by hardware or software methods, or by a combination thereof, the processor 202 may represent an entity (for example, physically embodied in circuitry) capable of performing operations according to an embodiment of the present disclosure while configured accordingly. Thus, for example, when the processor 202 is embodied as an ASIC, FPGA, or the like, the processor 202 may be specifically configured hardware for conducting the operations described herein.

In some example embodiments, the I/O interface 206 may communicate with the apparatus 102 and display the input and/or output of the apparatus 102. As such, the I/O interface 206 may include a display and, in some embodiments, may also include a keyboard, a mouse, a joystick, a touch screen, touch areas, soft keys, one or more microphones, a plurality of speakers, or other input/output mechanisms. In one embodiment, the apparatus 102 may include a user interface circuitry configured to control at least some functions of one or more I/O interface elements such as a display and, in some embodiments, a plurality of speakers, a ringer, one or more microphones and/or the like. The processor 202 and/or I/O interface 206 circuitry comprising the processor 202 may be configured to control one or more functions of one or more I/O interface 206 elements through computer program instructions (for example, software and/or firmware) stored on a memory 204 accessible to the processor 202. The processor 202 may further render notifications associated with the navigation instructions, such as traffic data, traffic conditions, traffic congestion value, ETA, routing information, road conditions, driving instructions, etc., on the user equipment or audio or display onboard the vehicles via the I/O interface 206.

The communication interface 208 may comprise an input interface and output interface for supporting communications to and from the apparatus 102 or any other component with which the apparatus 102 may communicate. The communication interface 208 may be any means such as a device or circuitry embodied in either hardware or a combination of hardware and software that is configured to receive and/or transmit data to/from a communications device in communication with the apparatus 102. In this regard, the communication interface 208 may include, for example, an antenna (or multiple antennae) and supporting hardware and/or software for enabling communications with a wireless communication network. Additionally, or alternatively, the communication interface 208 may include the circuitry for interacting with the antenna(s) to cause transmission of signals via the antenna(s) or to handle receipt of signals received via the antenna(s). In some environments, the communication interface 208 may alternatively or additionally support wired communication. As such, for example, the communication interface 208 may include a communication modem and/or other hardware and/or software for supporting communication via cable, digital subscriber line (DSL), universal serial bus (USB), or other mechanisms. In some embodiments, the communication interface 208 may enable communication with a cloud-based network to enable deep learning, such as using the ML model 104 (that may be hosted on the cloud-based network).

FIG. 3 is a block diagram 300 that illustrates an exemplary first set of operations for determining low visibility in an environment around a vehicle, in accordance with an embodiment of the disclosure. FIG. 3 is explained in conjunction with elements from FIG. 1 and FIG. 2. With reference to FIG. 3, there is shown the block diagram 300 that illustrates exemplary operations from 302A to 302M, as described herein. The exemplary operations illustrated in the block diagram 300 may start at 302A and may be performed by any computing system, apparatus, or device, such as by the apparatus 102 of FIG. 1 or the processor 202 of FIG. 2. Although illustrated with discrete blocks, the exemplary operations associated with one or more blocks of the block diagram 300 may be divided into additional blocks, combined into fewer blocks, or eliminated, depending on the particular implementation.

In an embodiment, the user of the first vehicle 106A may be planning to navigate from the first location to the second location using the first vehicle 106A. The exemplary operations from 302A to 302M may be executed as soon as an ignition of the first vehicle 106A may be turned on or the first vehicle 106A starts moving. In another embodiment, the exemplary operations from 302A to 302M may be executed based on a reception of a user input from the user of the first vehicle 106A via an input device (say via a button installed in the first vehicle 106A). In yet another embodiment, the exemplary operations from 302A to 302M may be executed based on a reception of a notification from a hazard warning system. The notification may be indicative of hazardous conditions on the road segment 112.

At 302A, a location information acquisition operation may be executed. In the location acquisition operation, the apparatus 102 may be configured to obtain the location information indicating the location of the first vehicle 106A. Specifically, the input module 202A of the processor 202 may be configured to obtain the location information indicating the location of the first vehicle 106A. In an embodiment, the apparatus 102 may be configured to obtain the location information indicating the location of the first vehicle 106A based on the reception of the user input or the start of the ignition of the first vehicle 106A. In another embodiment, the apparatus 102 may be configured to obtain the location information automatically without reception of any user input. In an embodiment, the apparatus 102 may be configured to monitor for a visibility notification output from the first vehicle 106A. The visibility notification is associated with the visibility of the environment 116 around the first vehicle 106A. In an embodiment, the visibility notification may be indicative of low visibility within the environment 116 around the first vehicle 106A. For example, the visibility notification may indicate that objects at a range of 200 meters from the first vehicle 106A may not be visible/detectible to an occupant of the first vehicle 106A and/or sensors equipped by the first vehicle 106A. In an embodiment, the visibility notification may be generated by the first vehicle 106A when: (1) high-beam lights of the first vehicle 106A are activated; (2) the speed of the first vehicle 106A is below a threshold speed (e.g., 30 miles per hour); or (3) a combination thereof. In an embodiment, the visibility notification may be generated by the first vehicle 106A when a service provider (e.g., a weather service provider) generates information indicating low visibility at the location of the first vehicle 106A. In an embodiment, the apparatus 102 and/or the first vehicle 106A may acquire sensor data indicative of the environment 116, process the sensor data to detect one or more objects within the environment 116, and output the visibility notification indicating visibility within the environment 116 based on the processed sensor data. In an embodiment, the apparatus 102 may be configured to obtain the location information responsive to detecting the visibility notification.

At 302B, an area determination operation may be executed. In the area determination operation, the apparatus 102 may be configured to determine, by using the map database 108B, an area captured within a first tile level based on the location information. The area captured within the first tile level may include the location of the first vehicle 106A. In an embodiment, the processor 202 may be configured to determine, by using the map database 108B, the area captured within the first tile level based on the obtained location information. Additionally or alternatively, a tile determination operation may be executed. In the tile determination operation, the apparatus 102 may be configured to determine the first tile level based on the location information. In an embodiment, the processor 202 may be configured to determine the first tile level based on the location information. In some embodiments, the apparatus 102 may be configured to determine the first tile level based on a tile level map stored in the map database 108B and the location information. The first tile level may indicate a first portion of a geographical region at a first resolution level. In an embodiment, the first portion of the geographical region may include road segment 112.

In an embodiment, the map database 108B may generate the tile level map that indicates a hierarchical resolution tile representation of the geographical region. The hierarchical resolution tile representation includes a plurality of tile levels. Each tile level of the plurality of tile levels may represent at least a portion of the geographical region at a different resolution. In an embodiment, the map database 108B may determine resolution levels for the plurality of tile levels based on increasing levels with resolution at level 0 being the lowest. Under this example hierarchy, the lowest resolution level (e.g., level 0), the tile level map may be represented by a fixed resolution (e.g., 512 × 512 pixels). Then at each increasing resolution level, the map resolution may be doubled so that the resolution at level 1 increases to 1024 × 1024 pixels, the resolution at level 2 increases to 2048 x 2048 pixels, and so on. In another embodiment, the tile level map may be of a fixed size (e.g., the surface of the Earth), each pixel at each increasing successive level will correspond to a smaller geographic area or a ground resolution. For example, for a whole Earth map at level 0, the ground resolution is approximately 78 million meters per pixel, and at level 22, the ground resolution is approximately 0.02 meters per pixel.

In one embodiment, the map database 108B may be configured to indicate each tile level of the plurality of tile levels based on a respective tile identifier (tile ID) associated with the corresponding tile level. For example, the top left tile associated with the tile level map may be numbered 00, the top right tile associated with the tile level map may be numbered 01, the bottom left tile associated with the tile level map may be numbered 10, and the bottom right tile associated with the tile level map may be numbered 11. In an embodiment, the map database 108B may be configured to identify the tile key based on the tile ID of the tile of the tile level map.

At 302C, a road segments determination operation may be executed. In the road segments determination operation, the apparatus 102 may be configured to determine a set of road segments within the area captured within the first tile level. The set of road segments may include the road segment 112 on which the first vehicle 106A is being driven. In an embodiment, the processor 202 may be configured to determine the set of road segments within the area captured within the first tile level. Specifically, the set of road segments may include all road segments that may be within the determined area..

At 302D, an attribute determination operation may be executed. In the attribute determination operation, the apparatus 102 may be configured to determine a first attribute of each road segment of the set of road segments. In an embodiment, the first attribute may be a road width. In an embodiment, the road width may correspond to a maximum horizontal distance between two opposing edges of a road. For example, in the illustrated embodiment, the road width corresponds to a horizontal distance between a left edge of the first lane segment 114A and a right edge of the Nth lane segment 114N. In an embodiment, the processor 202 may be configured to determine the first attribute of each road segment of the set of road segments.

At 302E, a determination is made whether at least one road segment of the set of road segments satisfies a road attribute requirement or not. Specifically, the apparatus 102 may determine whether the determined first attribute of at least one road segment of the set of road segments satisfies the road attribute requirement or not based on an assessment of the determined first attribute of each road segment of the set of road segments with the road attribute requirement. The road attribute requirement requires the road width between the first width (for example 40 meters) and the second width (for example 200 meters). In an embodiment, the processor 202 may be configured to assess the first attribute of each road segment of the set of road segments with the road attribute requirement. If the determined first attribute of at least one road segment of the set of road segments satisfies the road attribute requirement, the operation proceeds to 302I. Otherwise, the operation proceeds to 302F.

At 302F, a decrease tile operation may be executed. In the decrease tile level operation, the apparatus 102 may be configured to determine a second tile level based on the location information. Similar to the first tile level, the second tile level may be determined using the map database 108B. In an embodiment, the apparatus 102 may be configured to execute the decrease tile operation in response to each road segment of the set of road segments within the area captured within the first tile level failing to satisfy the road attribute requirement.

In an embodiment, a resolution of the first tile level may be greater than a resolution of the second tile level. In an example embodiment, the apparatus 102 may configured to decrease the first level, for example, a tile level 30 to the second tile level, for example, a tile level 29. The resolution of the tile level 29 may be greater than a resolution of the tile level 30. The apparatus 102 may be configured to decrease the tile level 30 to tile level 29 based on a determination that each road segment of a first set of road segments associated with the tile level 30 fails to satisfy the attribute requirement.

At 302G, a determination is made whether the decreased tile level, for example, the second tile level is greater than a threshold tile level or not. In an embodiment, the processor 202 may be configured to determine whether the decreased tile level is greater than the threshold tile level or not. In an embodiment, the threshold tile level is a resolution level, for example, the 512 X 512 pixels, the 1024 X 1024 pixels, and the like. In another embodiment, the threshold tile level is a pre-determined tile level, for example, a 26 tile level. In case the decreased tile level is greater than the tile threshold level, then the operation returns to 302B, and 302B, 302C, 302D, and 302E are performed based on the decreased tile level. Otherwise, the operation terminates at 302H.

At 302I, an attribute acquisition operation may be executed based on a determination that at least one road segment satisfies the road attribute requirement, at 302E. In the attribute acquisition operation, the apparatus 102 may obtain, from the map database 108B, at least one attribute associated with a road segment among the set of road segments that satisfies the road attribute requirement. In an embodiment, said road segment may also be a road segment that is the closest to the location of the first vehicle 106A. In the illustrated embodiment, the road segment 112 is determined as a road segment that satisfies the road attribute requirement and is the closest to the location of the first vehicle 106A, and the apparatus 102 obtains at least one attribute associated with the first vehicle 106A from the map database 108B. The at least one attribute may indicate a width of the road segment, a set of lanes within the road segment, a width of each lane of the set of lanes, a presence of a physical divider within the road segment, a width of the physical divider, or a combination thereof.

At 302J, a position determination operation may be executed. In the position determination operation, the apparatus 102 may be configured to determine a position of the first vehicle 106A with respect to the road segment 112 based on the at least one road attribute. In an embodiment, the processor 202 may be configured to determine, based on the at least one road attribute, the position of the first vehicle 106A with respect to the road segment 112. In an embodiment, the apparatus 102 may be configured to perform a lane-level map-matching to determine the position of the first vehicle 106A with respect to the road segment 112 based on the at least one road attribute. In the lane-level map-matching, the processor 202 may be configured to compare, using a matching algorithm, the obtained location information with lane-level information stored in the map database 108B. The lane-level information may include, but is not limited to, positions of lane boundaries associated with the set of lane segments 114, the position of lane markings associated with the set of lane segments 114, types of lanes associated with the set of lane segments 114, and the like. The processor 202 may be configured to identify, based on the comparison, the first lane segment 114A on which the first vehicle 106A is traveling. The processor 202 may be configured to determine the position of the first vehicle 106A within the road segment 112. In another embodiment, the processor 202 may be configured to determine the position of the first vehicle 106A on the road segment 112 based on geospatial coordinates associated with the location of the first vehicle 106A. The geospatial coordinates may include a latitude value and a longitude value. The latitude values may indicate a north-south position on the surface of the earth. The longitude values may indicate an east-west position on the surface of the earth. In yet another embodiment, the processor 202 may be configured to determine the position of the first vehicle 106A on the road segment 112 based on a comparison between the geospatial coordinates and one or more reference points. In an embodiment, the one or more reference points may be one or more points defined on one or more objects (e.g., lane markings, dividers, light posts, signposts, etc.), a starting point of a journey, an ending point of the journey, or a combination thereof. In the illustrated embodiment, the apparatus 102 determines that the first vehicle 106A is located on the first lane segment 114A by performing the position determination operation.

At 302K, an image acquisition operation may be executed. In the image acquisition operation, the apparatus 102 may be configured to acquire at least one image of the environment 116 via the at least one image capture sensor equipped by the first vehicle 106A based on the position. In an embodiment, processor 202 may be configured to acquire the at least one image of the environment 116 via the at least one image capture sensor equipped by the first vehicle 106A based on the position of the first vehicle 106A.

In an embodiment, to acquire the at least one image of the environment 116, the apparatus 102 may be configured to determine a first distance between a first edge of the road segment 112 and the first vehicle 106A based on the position of the first vehicle 106A with respect to the road segment 112. The apparatus 102 may be configured to determine a second distance between a second edge of the road segment 112 and the first vehicle 106A based on the position of the first vehicle 106A with respect to the road segment 112. The second edge of the road segment is positioned on the opposite side of the first edge of the road segment 112. The apparatus 102 may be configured to compare the first distance with the second distance. The apparatus 102 may be configured to acquire the at least one image of the environment 116 via the at least one image capture sensor based on the comparison between the first distance and the second distance. For example, if the first distance is greater than the second distance, the apparatus 102 may acquire at least one image indicating a view directed towards the first edge. By way of another example, if the second distance is greater than the first distance, the apparatus 102 may acquire at least one image indicating a view directed towards the second edge.

In an embodiment, the first vehicle 106A may be equipped with a plurality of image capture sensors installed at a plurality different orientations and positions around the vehicle, thereby enabling the first vehicle 106A to capture a plurality of images from a plurality of different point-of-views from the first vehicle 106A. In such embodiment, the apparatus 102 may transmit to the first vehicle 106A a request for an image at a certain point-of-view from the first vehicle 106A. In response, the first vehicle 106A may identify an image capture sensor corresponding to the requested point-of-view and transmit one or more images captured by the image capture sensor to the apparatus 102.

In another embodiment, the first vehicle 106A may be equipped with an image capture sensor that is capable of capturing images at a plurality of different point-of-views from the first vehicle 106A (e.g., a rotatable camera). In such embodiment, the apparatus 102 may transmit to the first vehicle 106A a request for an image at a certain point-of-view from the first vehicle 106A. In response, the first vehicle 106A may control the image capture sensor to orient itself, thereby enabling the point-of-view of the image capture sensor to correspond to the requested point-of-view. Additionally, the first vehicle 106A may cause the image capture sensor to capture one or more images at the requested point-of-view and transmit the one or more image to the apparatus 102.

In an embodiment, the first vehicle 106A may use one or more image capture sensors equipped by the first vehicle 106A to capture a plurality of images over time as the first vehicle 106A traverses the road segment 112. In such embodiment, the apparatus 102 may transmit to the first vehicle 106A a request for an image at a certain point-of-view from the first vehicle 106A at a certain point of time. Said point of time may correspond to an instance in which the first vehicle 106A was located at a certain position within the road segment (e.g., a time in which the first vehicle 106A was within the first lane segment 114A). In response to the request, the first vehicle 106A may search through the plurality of image to identify one or more images corresponding to the request and transmit the same to the apparatus 102.

In the illustrated embodiment, the apparatus 102 determines that a distance between the first vehicle 106A and a right edge of the road segment 112 is greater than a distance between the first vehicle 106A and a left edge of the road segment 112. As such, the apparatus 102 transmits a request to the first vehicle 106A for an image of a view directed towards the right edge of the road segment 112. In response, the first vehicle 106A acquires an image of the view directed towards the right edge of the road segment 112 and transmits the image to the apparatus 102.

At 302L, a visibility determination operation may be executed. In the visibility information determination operation, the apparatus 102 may be configured to determine the visibility information indicative of the visibility of the environment 116 around the first vehicle 106A based on the acquired at least one image of the environment 116. Specifically, the visibility determination module 202C of the processor 202 may be configured to determine the visibility information indicative of the visibility of the environment 116 around the first vehicle 106A based on the acquired at least one image.

In an embodiment, ML application module 202B of the processor 202 may be configured to apply the ML model 104 on the at least one image of the environment 116. The ML model 104, which is trained to detect an edge of a road segment in an image, determines whether the at least one image of the environment 116 includes an edge of the road segment 112 (e.g., the right edge of the road segment 112).

In an embodiment, the visibility determination module 202C of the processor 202 may be configured to determine the visibility information based on the output of the ML model 104. Specifically, the visibility information may indicate visibility up to the pre-determined distance from the first vehicle 106A. Examples of the pre-determined distance include, but are not limited to, 0 meters (m), 50m, 100m, and 150m. Such pre-determined distance may correspond to a distance between the first vehicle and a road edge of a road segment. For example, in the illustrated embodiment, the width of the road segment 112 may be 50m, and if the output of the ML model 104 indicates that a road edge was not detected from the at least one image, the visibility information may indicate that visibility from the first vehicle 106A is less than 50m. However, if the output of the ML model 104 indicates that a road edge was detected from the at least one image, the visibility information may indicate that the visibility from the first vehicle 106A is greater than 50m. In an embodiment, a higher value of the pre-determined distance may be indicative of a greater visibility whereas a lower value of the pre-determined distance may be indicative of a lower visibility.

At 302M, a visibility information output operation may be executed. In the visibility information output operation, the apparatus 102 may be configured to output the visibility information. Specifically, the output module 202D of the processor 202 may be configured to output the visibility information. In an embodiment, the output of the visibility information may correspond to the rendering of the visibility information on the user interface. In another embodiment, the output of the visibility information may correspond to updating a map layer stored in the map database 108B to indicate the visibility information. The map layer may be associated with the road segment on which the first vehicle 106A may be driven. In yet another embodiment, the output of the visibility information may be used as a signal for causing the first vehicle 106A to control the at least one vehicle-related function (such as cruise control, speed control, brake application, and the like). In yet another embodiment, the output of the visibility information may correspond to a combination of rendering of the visibility information on the user interface, updating a map layer stored in the map database 108B to indicate the visibility information, or causing the first vehicle 106A to control the at least one vehicle-related function based on the visibility information.

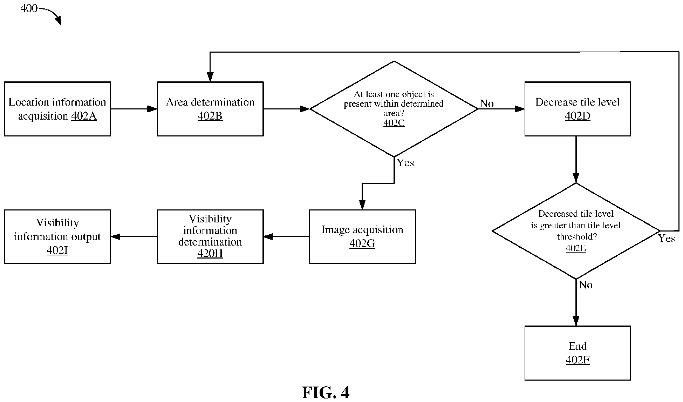

FIG. 4 is a block diagram 400 that illustrates an exemplary second set of operations for determining low visibility of an environment around a vehicle, in accordance with an embodiment of the disclosure. FIG. 4 is explained in conjunction with elements from FIGs 1, 2, and 3. With reference to FIG. 4, there is shown the block diagram 400 that illustrates exemplary operations from 402A to 402I, as described herein. The exemplary operations illustrated in block diagram 400 may start at 402A and may be performed by any computing system, apparatus, or device, such as by the apparatus 102 of FIG. 1 or the processor 202 of FIG. 2. Although illustrated with discrete blocks, the exemplary operations associated with one or more blocks of the block diagram 400 may be divided into additional blocks, combined into fewer blocks, or eliminated, depending on the implementation.

At 402A, the location information acquisition operation may be executed. In the location acquisition operation, the apparatus 102 may be configured to obtain the location information indicating the location of the first vehicle 106A. Specifically, the input module 202A of the processor 202 may be configured to obtain the location information indicating the location of the first vehicle 106A. Details about the location information acquisition operation are provided, for example, at 302A in FIG. 3.

At 402B, the area determination operation may be executed. In the area determination operation, the apparatus 102 may be configured to determine, by using the map database 108B, an area captured within the first tile level based on the location information. The area captured within the first tile level includes the location of the first vehicle 106A. In an embodiment, the processor 202 may be configured to determine, by using the map database 108B, the area captured within the first tile level based on the location information. The area captured within the first tile level includes the location of the vehicle. Details about the area determination operation are provided, for example, at 302B in FIG. 3.

At 402C, a determination is made whether at least one object is present within the determined area or not. In an embodiment, the apparatus 102 may be configured to assess the area captured within the first tile level to identify the at least one object within the area captured within the first tile level.

In an embodiment, the object may be a static/mappable object, such as a road marking, a road object, a traffic light, a utility pole, an advertisement structure, a building structure, or a road signboard. Examples of the road objects may include, but are not limited to, road signs, guardrails, road markings, traffic cones, road barriers, and roadside trees. Examples of traffic lights include, but are not limited to, fixed-time traffic lights, actuated traffic lights, and smart traffic lights. Examples of utility poles may include, but are not limited to, power poles, telephone poles, joint poles, and non-joint poles. Examples of road objects may include, but are not limited to, billboards, banners, and digital displays. Examples of the building structures may include, but are not limited to, apartment buildings, hotels, hospitals, towers, shopping malls, and government buildings. In an embodiment, the apparatus 102 may be configured to detect an object proximate to the location of the first vehicle 106A based on the location information by using the map database 108B. In an embodiment, the processor 202 may be configured to determine whether the at least one object is present within the determined area or not. If the at least one object is present within the determined area, the operation continues to 402G. Otherwise, the operation continues to 402D.

At 402D, a decrease tile operation may be executed in response to determining that no object is present within the determined area. In the decrease tile level operation, the apparatus 102 may be configured to determine, by using the map database 108B, a second tile level based on the location information in response to the area captured within the first tile level excluding any object.

In an example embodiment, the apparatus 102 may be configured to decrease the tile level 30 to the tile level 29 in response to determining that no object is present in an area captured within the tile level 30. The area captured within the second tile level includes the location of the first vehicle 106A.

At 402E a determination is made whether the decreased tile level (for example, the second tile level) is greater than the threshold tile level or not. If the decreased tile level is greater than the threshold tile level, the operation returns to 402B, and 402B and 402C are performed based on the decreased tile level. Otherwise, the operation terminates at 402F.

At 402G, an image acquisition operation may be executed in response to the determined area captured within the tile level for 402C including the at least one object. In the image acquisition operation, the apparatus 102 may be configured to acquire at least one image of the environment 116 via at least one image capture sensor equipped by the first vehicle 106A. Specifically, the apparatus 102 may identify an object proximate to the first vehicle 106A and acquire at least one image via at least one image capture sensor equipped by the first vehicle 106A such that the at least one image indicates a view directed towards the object.

In an embodiment, the apparatus 102 may use the location information and the map database 108B to identify the location of the object with respect to the location of the first vehicle 106A. In an embodiment, the apparatus 102 may identify an object as being proximate to the first vehicle 106A if a distance between the location of the object and the first vehicle 106A satisfies a threshold distance requirement. In such embodiment, the threshold distance requirement may require that: (1) said distance is at least a minimum threshold distance (e.g., 45 meters); (2) said distance is at most a maximum threshold distance (e.g., 55 meters); or (3) a combination thereof.

In an embodiment, the first vehicle 106A may be equipped with a plurality of image capture sensors installed at a plurality different orientations and positions around the vehicle, thereby enabling the first vehicle 106A to capture a plurality of images from a plurality of different point-of-views from the first vehicle 106A. In such embodiment, the apparatus 102 may transmit to the first vehicle 106A a request for an image at a certain point-of-view from the first vehicle 106A that indicates a view directed towards the object. In response, the first vehicle 106A may identify an image capture sensor corresponding to the requested point-of-view and transmit one or more images captured by the image capture sensor to the apparatus 102.

In another embodiment, the first vehicle 106A may be equipped with an image capture sensor that is capable of capturing images at a plurality of different point-of-views from the first vehicle 106A (e.g., a rotatable camera). In such embodiment, the apparatus 102 may transmit to the first vehicle 106A a request for an image at a certain point-of-view from the first vehicle 106A that indicates a view directed towards the object. In response, the first vehicle 106A may control the image capture sensor to orient itself, thereby enabling the point-of-view of the image capture sensor to correspond to the requested point-of-view. Additionally, the first vehicle 106A may cause the image capture sensor to capture one or more images at the requested point-of-view and transmit the one or more image to the apparatus 102.

In an embodiment, the first vehicle 106A may use one or more image capture sensors to capture a plurality of images over time as the first vehicle 106A traverses the road segment 112. In such embodiment, the apparatus 102 may transmit to the first vehicle 106A a request for an image at a certain point-of-view from the first vehicle 106A at a certain point of time. Said point of time may correspond to an instance in which the first vehicle 106A was located at a certain position with respect to the object (e.g., a time in which the first vehicle 106A was located at 50 meters away from the object). In response to the request, the first vehicle 106A may search through the plurality of image to identify one or more images corresponding to the request and transmit the same to the apparatus 102.

At 402H, a visibility information determination operation may be executed. In the visibility information determination operation, the apparatus 102 may be configured to determine the visibility information indicative of the visibility of the environment 116 of the first vehicle 106A based on the at least one image of the environment 116. Specifically, the visibility determination module 202C of the processor 202 may be configured to determine the visibility information indicative of the visibility of the environment 116 of the first vehicle 106A based on the at least one image of the environment 116. Additionally or alternatively, the visibility information may indicate the visibility of the object from the first vehicle 106A.

In an embodiment, the ML application module 202B of the processor 202 may be configured to apply the ML model 104 on the at least one image of the environment 116 to determine the visibility information. In an embodiment, the ML model 104 may be a ML model that is trained to detect the object in the at least one image within the image of the environment 116. The apparatus 102 may be configured to apply the ML model on the at least one image to determine whether the object is visible within the determined area. For example, in the illustrated embodiment, a road marking may be positioned 50m away from the first vehicle 106A, and if the ML model 104 provides an output indicating that the road marking was detected within an image acquired by the first vehicle 106A, the visibility information may indicate that visibility from the first vehicle 106A is greater than 50m. However, if the output of the ML model 104 indicates that the road marking was not detected within the image, the visibility information may indicate that the visibility from the first vehicle 106A is less than 50m.

At 402I, the visibility information output operation may be executed. In the visibility information output operation, the apparatus 102 may be configured to output the visibility information. Specifically, the output module 202D of the processor 202 may be configured to output the visibility information. Details about the visibility information output operation are provided, for example, at 302M in FIG. 3.

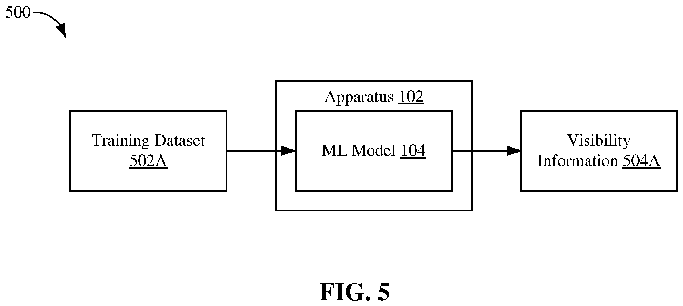

FIG. 5 is a block diagram 500 that illustrates training of the ML model 104 for determining low visibility of an environment around a vehicle, in accordance with an embodiment of the disclosure. FIG. 5 is explained in conjunction with elements from FIGs. 1, 2, 3, and 4. With reference to FIG. 5, there is shown the block diagram 500 of the apparatus 102 that includes the ML model 104. There is further shown a training dataset 502A, and visibility information 504A.

In an embodiment, the apparatus 102 may be configured to train the ML model 104. The ML model 104 may be trained on the training dataset 502A. The training dataset 502A may include a plurality of training samples and may correspond to a collection of examples that may be used to train the ML model 104 to make accurate predictions or classifications. The training of the ML model 104 may be an essential component in a machine learning process as it helps the ML model 104 to learn patterns and relationships within input features (i.e., the set of features).

In an embodiment, the apparatus 102 may be configured to receive a first training sample of the plurality of training samples. The first training sample may be indicative of data associated with historical data on the visibility of the environment 116. Specifically, the first training sample may include the images of the environment comprising a road edge and the distance to the road edge from the vehicle. In another embodiment, the first training sample may include the images of the environment comprising an object and the distance to the corresponding object from the vehicle. The image may be captured from the vehicle.

The apparatus 102 may be configured to train the ML model 104 using the training dataset 502A to output the visibility information in real-life scenarios. In an embodiment, the training of the ML model 104 may cause the ML model 104 to generate output as a function of the set of attributes. The apparatus 102 may be further configured to determine the visibility information based at least in part on the output of the ML model 104.

In another embodiment, the apparatus 102 may be configured to generate a new training sample to be included in the training dataset 502A. The new training sample may include the captured image, and the determined visibility information. The apparatus 102 may be further configured to re-train the ML model 104 using the generated new training sample. Therefore, the ML model 104 may be re-trained even when the ML model 104 is deployed in real-life scenarios.

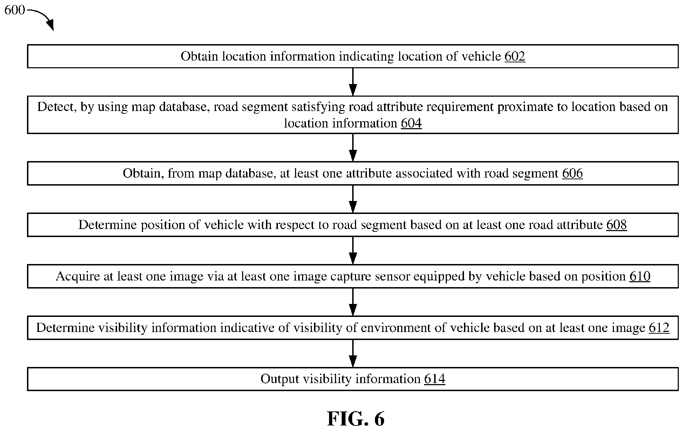

FIG. 6 is a flowchart 600 that illustrates an exemplary first method for determining low visibility of an environment around a vehicle, in accordance with an embodiment of the disclosure. FIG. 6 is explained in conjunction with elements from FIGs. 1, 2, 3, 4 and 5. With reference to FIG. 6, there is shown a flowchart 600. The operations of the exemplary method may be executed by any computing system, for example, by the apparatus 102 of FIG. 1 or the processor 202 of FIG. 2. The operations of the flowchart 600 may start at 602.

At 602, location information may be obtained. In an embodiment, the apparatus 102 may be configured to obtain the location information indicating the location of the first vehicle 106A. In at least one embodiment, the processor 202 may be configured to obtain the location information indicating the location of the first vehicle 106A, as described, for example, in FIGs. 1 and 3 (at 302A).

At 604, a road segment may be detected. In an embodiment, the apparatus 102 may be configured to detect, by using the map database 108B, the road segment 112 satisfying the road attribute requirement and being proximate to the location of the first vehicle 106A based on the location information. In at least one embodiment, the processor 202 may be configured to detect, by using the map database 108B, the road segment satisfying the road attribute requirement proximate to the location based on the location information, as described, for example, in FIG. 3 (at 302B, 302C, 302D, 302E, 302F, and 302G).

At 606, at least one attribute may be obtained. In an embodiment, the apparatus 102 may be configured to obtain, from the map database 108B, at least one attribute associated with the road segment 112. In at least one embodiment, the processor 202 may be configured to obtain, from the map database 108B, the at least one attribute associated with the road segment 112, as described, for example, in FIG. 3 (at 302I).

At 608, a position of the first vehicle 106A may be determined. In an embodiment, the apparatus 102 may be configured to determine the position of the first vehicle 106A with respect to the road segment 112 based on the at least one road attribute. In at least one embodiment, the processor 202 may be configured to the position of the first vehicle 106A with respect to the road segment 112 based on the at least one road attribute, as described, for example, inFIG. 3 (at 302J).

At 610, at least one image of the environment 116 is acquired. In an embodiment, the apparatus 102 may be configured to acquire the at least one image of the environment 116 via at least one image capture sensor equipped by the first vehicle 106A based on the position of the first vehicle 106A. In at least one embodiment, the processor 202 may be configured to acquire the at least one image of the environment 116 via at least one image capture sensor equipped by the first vehicle 106A based on the position of the first vehicle 106A. Details about the image acquisition are provided, for example, inFIG. 3 (at 302K).

At 612, visibility information are determined. In an embodiment, the apparatus 102 may be configured to determine the visibility information indicative of the visibility of the environment 116 of the first vehicle 106A based on the at least one image of the environment 116. In at least one embodiment, the processor 202 may be configured to determine the visibility information indicative of the visibility of the environment 116 of the first vehicle 106A based on the at least one image of the environment 116. Details about the visibility information determination are provided, for example, inFIG. 3 (at 302L).

At 614, the visibility information is outputted. In an embodiment, the apparatus 102 may be configured to output the visibility information. In at least one embodiment, the processor 202 may be configured to output the visibility information. Details about outputting the visibility information are provided, for example, in FIG. 3(at 302M). Control may pass to the end.

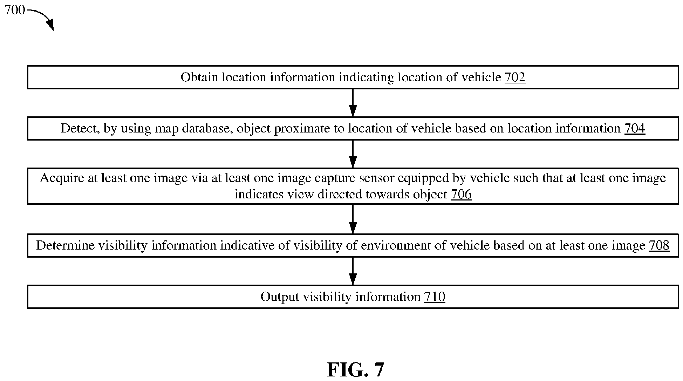

FIG. 7 is a flowchart 700 that illustrates an exemplary second method for determining low visibility of an environment 116 around the vehicle, in accordance with an embodiment of the disclosure. FIG. 7 is explained in conjunction with elements from FIGs. 1, 2, 3, 4, 5 and 6. With reference to FIG. 7, there is shown a flowchart 700. The operations of the exemplary method may be executed by any computing system, for example, by the apparatus 102 of FIG. 1 or the processor 202 of FIG. 2. The operations of the flowchart 700 may start at 702.

At 702, location information are obtained. In an embodiment, the apparatus 102 may be configured to obtain the location information indicating the location of the first vehicle 106A. In at least one embodiment, the processor 202 may be configured to obtain the location information indicating the location of the first vehicle 106A, as described, for example, in FIGs. 1 and FIG. 4 (at 402A).

At 704, an object is detected. In an embodiment, the apparatus 102 may be configured to detect, by using the map database 108B, the object proximate to the location of the first vehicle 106A based on the location information. In at least one embodiment, the processor 202 may be configured to detect, by using the map database 108B, the object proximate to the location of the first vehicle 106A based on the location information, as described, for example, in FIG. 4 (at 402B, 402C, 40D, and 402E).

At 706, at least one image of the environment 116 is acquired. In an embodiment, the apparatus 102 may be configured to acquire the at least one image via at least one image capture sensor equipped by the first vehicle 106A based on the position of the first vehicle 106A. In an embodiment, the processor 202 may be configured to acquire the at least one image of the environment 116 via at least one image capture sensor equipped by the first vehicle 106A based on the position of the first vehicle 106A. Details about the image acquisition are provided, for example, in FIG. 4 (at 402G).

At 708, visibility information are determined. In an embodiment, the apparatus 102 may be configured to determine the visibility information indicative of the visibility of the environment 116 of the first vehicle 106A based on the at least one image of the environment 116. In at least one embodiment, the processor 202 may be configured to determine the visibility information indicative of the visibility of the environment 116 of the first vehicle 106A based on the at least one image. Details about the visibility information determination are provided, for example, in 4 (at 402H).

At 710, the visibility information is outputted. In an embodiment, the apparatus 102 may be configured to output the visibility information. In at least one embodiment, the processor 202 may be configured to output the visibility information. Details about outputting the visibility information are provided, for example, in FIGs. 3 (at 302M), 4 (at 402I), and 5 (504A). Control may pass to the end.

Various embodiments of the present disclosure may determine the visibility of the environment 116 of the first vehicle 106A. Various embodiments of the present disclosure may utilize the at least one image capture sensor equipped by the first vehicle 106A to capture the at least one image of the environment 116. Various embodiments of the present disclosure may train the ML model 104 to detect the edge of the road segment 116A in the at least one image of the environment 116. Various embodiments of the present disclosure may train the ML model 104 to detect the object in the at least one image of the environment 116. Various embodiments of the present disclosure may determine the visibility information indicative of the visibility of the environment 116 around the first vehicle 106A based on the output of the ML model. The utilization of the ML model may increase a reliability of the output. Additionally or alternatively, the utilization of the ML model may decrease false notifications associated with the visibility information. Various embodiments of the present disclosure may output the visibility information on the user interface.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments **In** this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising at least one processor and at least one non-transitory memory including computer program code instructions, the computer program code instructions configured to, when executed, cause the apparatus to:
obtain location information indicating a location of a vehicle;
detect, by using a map database, a road segment satisfying a road attribute requirement proximate to the location based on the location information;
obtain, from the map database, at least one attribute associated with the road segment;
determine a position of the vehicle with respect to the road segment based on the at least one road attribute;
acquire at least one image via at least one image capture sensor equipped by the vehicle based on the position;
determine visibility information indicative of visibility of an environment around the vehicle based on the at least one image; and
output the visibility information;
wherein the road segment is a first road segment, and wherein, to detect the first road segment, the computer program code instructions are configured to, when executed, cause the apparatus to:
determine, by using the map database, an area captured within a first tile level based on the location information, wherein the area captured within the first tile level includes the location of the vehicle;
determine a set of road segments within the area captured within the first tile level;
determine a first attribute of each road segment of the set of road segments;
assess the first attribute of each road segment of the set of road segments with the road attribute requirement; and
responsive to the set of road segments including at least one road segment that satisfies the road attribute requirement, define a road segment among the set of road segments that satisfies the road attribute requirement and is closest to the location as the first road segment;
wherein the set of road segments is a first set of road segments, and wherein, to detect the first road segment, the computer program code instructions are configured to, when executed, cause the apparatus to, responsive to each road segment of the first set of road segments failing to satisfy the road attribute requirement:
determine, by using the map database, an area captured within a second tile level based on the location information, wherein a resolution of the first tile level is greater than a resolution of the second tile level;
determine a second set of road segments within the area captured within the second tile level;
determine the first attribute of each road segment of the second set of road segments;
assess the first attribute of each road segment of the second set of road segments with the road attribute requirement; and
responsive to the second set of road segments including at least one road segment that satisfies the road attribute requirement, define a road segment among the second set of road segments that satisfies the road attribute requirement and is closest to the location as the first road segment.

2. The apparatus of claim 1, wherein the first attribute is a road width, and wherein the road attribute requirement requires a road width between a first width and a second width.

3. The apparatus of claim 1, wherein the at least one attribute corresponds to a width of the road segment, a set of lanes within the road segment, a width of each lane of the set of lanes, a presence of a physical divider within the road segment, a width of the physical divider, or a combination thereof.

4. The apparatus of claim 1, wherein, to acquire the at least one image, the computer program code instructions are configured to, when executed, cause the apparatus to:
determine a first distance between a first edge of the road segment and the vehicle based on the position of the vehicle with respect to the road segment;
determine a second distance between a second edge of the road segment and the vehicle based on the position of the vehicle with respect to the road segment, wherein the second edge opposes the first edge;
compare the first distance with the second distance;
responsive to the first distance being greater than the second distance, acquire the at least one image via the at least one image capture sensor such that the at least one image indicates a view directed towards the first edge; and
responsive to the second distance being greater than the first distance, acquire the at least one image via the at least one image capture sensor such that the at least one image indicates a view directed towards the second edge.

5. The apparatus of claim 1, wherein the computer program code instructions are configured to, when executed, cause the apparatus to perform a lane-level map-matching to determine the position of the vehicle with respect to the road segment based on the at least one road attribute.

6. The apparatus of claim 1, wherein the computer program code instructions are configured to, when executed, cause the apparatus to:
(i) output the visibility information on a user interface;
(ii) update a map layer stored in the map database to indicate the visibility information;
(iii) based on the visibility information, cause the vehicle to control at least one vehicle-related function; or
(iv) a combination thereof.

7. The apparatus of claim 1, wherein, to determine the visibility information, the computer program code instructions are configured to, when executed, cause the apparatus to:
apply a machine learning (ML) model on the at least one image; and
determine the visibility information based on an output of the ML model, wherein the ML model is trained to detect an edge of the road segment in the at least one image.

8. The apparatus of claim 7, wherein the visibility information indicates visibility up to a pre-determined distance from the vehicle.

9. The apparatus of claim 1, wherein the computer program code instructions are configured to, when executed, cause the apparatus to:
monitor for a visibility notification output from the vehicle, wherein the visibility notification is associated with the visibility of the environment around the vehicle; and
responsive to detecting the visibility notification, obtain the location information.

10. A computer-implemented method comprising:
obtaining location information indicating a location of a vehicle;
detecting, by using a map database, an object proximate to the location of the vehicle based on the location information;
acquiring at least one image via at least one image capture sensor equipped by the vehicle such that the at least one image indicates a view directed towards the object;
determining visibility information indicative of visibility of an environment around the vehicle based on the at least one image; and
outputting the visibility information;
wherein the object is a first object, and wherein the detecting comprises:
determining, by using the map database, an area captured within a first tile level based on the location information, wherein the area captured within the first tile level includes the location of the vehicle;
assessing the area captured within the first tile level to identify at least one object within the area captured within the first tile level; and
responsive to the area captured within the first tile level including the at least one object within the area captured within the first tile level, define an object within the area captured within the first tile level that is proximate to the location as the first object; wherein the detecting comprises, responsive to the area captured within the first tile level excluding any object:
determining, by using the map database, an area captured within a second tile level based on the location information, wherein the area captured within the second tile level includes the location of the vehicle;
assessing the area captured within the second tile level to identify at least one object within the area captured within the second tile level; and
responsive to the area captured within the second tile level including the at least one object, define an object within the area captured within the second tile level that is proximate to the location as the first object.

11. The method of claim 10, wherein the object is a road marking, a road object, a traffic light, a utility pole, an advertisement structure, a building structure, or a road sign board, and wherein the visibility information indicates the visibility of the object from the vehicle.

12. A non-transitory computer-readable storage medium having computer program code instructions stored therein, the computer program code instructions, when executed by at least one processor, cause the at least one processor to:
obtain location information indicating a location of a vehicle;
detect, by using a map database, a road segment satisfying a road attribute requirement proximate to the location based on the location information;
obtain, from the map database, at least one attribute associated with the road segment;
determine a position of the vehicle with respect to the road segment based on the at least one road attribute;
acquire at least one image via at least one image capture sensor equipped by the vehicle based on the position;
determine visibility information indicative of visibility of an environment around the vehicle based on the at least one image; and
output the visibility information;
wherein the road segment is a first road segment, and wherein, to detect the first road segment, the computer program code instructions are configured to, when executed, cause the apparatus to:
determine, by using the map database, an area captured within a first tile level based on the location information, wherein the area captured within the first tile level includes the location of the vehicle;
determine a set of road segments within the area captured within the first tile level;
determine a first attribute of each road segment of the set of road segments;
assess the first attribute of each road segment of the set of road segments with the road attribute requirement; and
responsive to the set of road segments including at least one road segment that satisfies the road attribute requirement, define a road segment among the set of road segments that satisfies the road attribute requirement and is closest to the location as the first road segment;
wherein the set of road segments is a first set of road segments, and wherein, to detect the first road segment, the computer program code instructions are configured to, when executed, cause the apparatus to, responsive to each road segment of the first set of road segments failing to satisfy the road attribute requirement:
determine, by using the map database, an area captured within a second tile level based on the location information, wherein a resolution of the first tile level is greater than a resolution of the second tile level;
determine a second set of road segments within the area captured within the second tile level;
determine the first attribute of each road segment of the second set of road segments;
assess the first attribute of each road segment of the second set of road segments with the road attribute requirement; and
responsive to the second set of road segments including at least one road segment that satisfies the road attribute requirement, define a road segment among the second set of road segments that satisfies the road attribute requirement and is closest to the location as the first road segment.

## Patentansprüche

1. Vorrichtung, umfassend mindestens einen Prozessor und mindestens einen nichtflüchtigen Speicher, der Computerprogrammcodeanweisungen einschließt, wobei die Computerprogrammcodeanweisungen konfiguriert sind, um bei Ausführung die Vorrichtung zu veranlassen:
Standortinformationen, die einen Standort eines Fahrzeugs angeben, zu erhalten;
basierend auf den Standortinformationen, unter Verwendung einer Kartendatenbank, einen Straßenabschnitt zu erkennen, der eine Straßenattributanforderung in der Nähe des Standorts erfüllt;
aus der Kartendatenbank mindestens ein Attribut, das dem Straßenabschnitt zugeordnet ist, zu erhalten;
basierend auf dem mindestens einen Straßenattribut eine Position des Fahrzeugs in Bezug auf den Straßenabschnitt zu bestimmen;
basierend auf der Position mindestens ein Bild über mindestens einen Bildaufnahmesensor, mit dem das Fahrzeug ausgestattet ist, zu erfassen;
basierend auf dem mindestens einen Bild Sichtbarkeitsinformationen, die eine Sichtbarkeit einer Umgebung um das Fahrzeug angeben, zu bestimmen und
die Sichtbarkeitsinformationen auszugeben;
wobei der Straßenabschnitt ein erster Straßenabschnitt ist und wobei, um den ersten Straßenabschnitt zu erkennen, die Computerprogrammcodeanweisungen konfiguriert sind, um bei Ausführung die Vorrichtung zu veranlassen:
basierend auf den Standortinformationen, unter Verwendung der Kartendatenbank, einen innerhalb einer ersten Kachelebene aufgenommenen Bereich zu bestimmen, wobei der innerhalb der ersten Kachelebene aufgenommene Bereich den Standort des Fahrzeugs einschließt;
einen Satz von Straßenabschnitten innerhalb des Bereichs, der innerhalb der ersten Kachelebene aufgenommen ist, zu bestimmen;
ein erstes Attribut jedes Straßenabschnitts des Satzes von Straßenabschnitten zu bestimmen;
das erste Attribut jedes Straßenabschnitts des Satzes von Straßenabschnitten mit der Straßenattributanforderung zu bewerten und
als Reaktion darauf, dass der Satz von Straßenabschnitten mindestens einen Straßenabschnitt einschließt, der die Straßenattributanforderung erfüllt, einen Straßenabschnitt aus dem Satz von Straßenabschnitten, der die Straßenattributanforderung erfüllt und dem Standort am nächsten ist, als den ersten Straßenabschnitt zu definieren;
wobei der Satz von Straßenabschnitten ein erster Satz von Straßenabschnitten ist und wobei, um den ersten Straßenabschnitt zu erkennen, die Computerprogrammcodeanweisungen konfiguriert sind, um bei Ausführung, als Reaktion darauf, dass jeder Straßenabschnitt des ersten Satzes von Straßenabschnitten die Straßenattributanforderung nicht erfüllt, die Vorrichtung zu veranlassen:
basierend auf den Standortinformationen, unter Verwendung der Kartendatenbank, einen innerhalb einer zweiten Kachelebene aufgenommenen Bereich zu bestimmen, wobei eine Auflösung der ersten Kachelebene größer als eine Auflösung der zweiten Kachelebene ist;
einen zweiten Satz von Straßenabschnitten innerhalb des innerhalb der zweiten Kachelebene aufgenommenen Bereichs zu bestimmen;
das erste Attribut jedes Straßenabschnitts des zweiten Satzes von Straßenabschnitten zu bestimmen;
das erste Attribut jedes Straßenabschnitts des zweiten Satzes von Straßenabschnitten mit der Straßenattributanforderung zu bewerten und
als Reaktion darauf, dass der zweite Satz von Straßenabschnitten mindestens einen Straßenabschnitt einschließt, der die Straßenattributanforderung erfüllt, einen Straßenabschnitt aus dem zweiten Satz von Straßenabschnitten, der die Straßenattributanforderung erfüllt und dem Standort am nächsten ist, als den ersten Straßenabschnitt zu definieren.

2. Vorrichtung nach Anspruch 1, wobei das erste Attribut eine Straßenbreite ist und wobei die Straßenattributanforderung eine Straßenbreite zwischen einer ersten Breite und einer zweiten Breite erfordert.

3. Vorrichtung nach Anspruch 1, wobei das mindestens eine Attribut einer Breite des Straßenabschnitts, einem Satz von Fahrspuren innerhalb des Straßenabschnitts, einer Breite jeder Fahrspur des Satzes von Fahrspuren, einem Vorhandensein einer physischen Trennung innerhalb des Straßenabschnitts, einer Breite der physischen Trennung oder einer Kombination davon entspricht.

4. Vorrichtung nach Anspruch 1, wobei, um das mindestens eine Bild zu erfassen, die Computerprogrammcodeanweisungen konfiguriert sind, um bei Ausführung die Vorrichtung zu veranlassen:
einen ersten Abstand zwischen einem ersten Rand des Straßenabschnitts und dem Fahrzeug basierend auf der Position des Fahrzeugs in Bezug auf den Straßenabschnitt zu bestimmen;
einen zweiten Abstand zwischen einem zweiten Rand des Straßenabschnitts und dem Fahrzeug basierend auf der Position des Fahrzeugs in Bezug auf den Straßenabschnitt zu bestimmen, wobei der zweite Rand dem ersten Rand gegenüberliegt;
den ersten Abstand mit dem zweiten Abstand zu vergleichen;
als Reaktion darauf, dass der erste Abstand größer als der zweite Abstand ist, das mindestens eine Bild über den mindestens einen Bildaufnahmesensor derart zu erfassen, dass das mindestens eine Bild eine Ansicht angibt, die auf die erste Kante gerichtet ist; und
als Reaktion darauf, dass der zweite Abstand größer als der erste Abstand ist, das mindestens eine Bild über den mindestens einen Bildaufnahmesensor derart zu erfassen, dass das mindestens eine Bild eine Ansicht angibt, die auf die zweite Kante gerichtet ist.

5. Vorrichtung nach Anspruch 1, wobei die Computerprogrammcodeanweisungen konfiguriert sind, um bei Ausführung die Vorrichtung zu veranlassen, einen Kartenabgleich auf Fahrspurebene durchzuführen, um die Position des Fahrzeugs in Bezug auf den Straßenabschnitt basierend auf dem mindestens einen Straßenattribut zu bestimmen.

6. Vorrichtung nach Anspruch 1, wobei die Computerprogrammcodeanweisungen konfiguriert sind, um bei Ausführung die Vorrichtung zu veranlassen:
(i) die Sichtbarkeitsinformationen auf einer Bedienerschnittstelle auszugeben;
(ii) eine in der Kartendatenbank gespeicherte Kartenebene zu aktualisieren, um die Sichtbarkeitsinformationen anzugeben;
(iii) basierend auf den Sichtbarkeitsinformationen zu veranlassen, dass das Fahrzeug mindestens eine fahrzeugbezogene Funktion steuert; oder
(iv) eine Kombination davon.

7. Vorrichtung nach Anspruch 1, wobei, um die Sichtbarkeitsinformationen zu bestimmen, die Computerprogrammcodeanweisungen konfiguriert sind, um bei Ausführung die Vorrichtung zu veranlassen:
ein Modell für maschinelles Lernen (ML) auf das mindestens eine Bild anzuwenden und
die Sichtbarkeitsinformationen basierend auf einer Ausgabe des ML-Modells zu bestimmen, wobei das ML-Modell trainiert ist, einen Rand des Straßenabschnitts in dem mindestens einen Bild zu erkennen.

8. Vorrichtung nach Anspruch 7, wobei die Sichtbarkeitsinformationen eine Sichtbarkeit bis zu einer vorbestimmten Entfernung vom Fahrzeug angeben.

9. Vorrichtung nach Anspruch 1, wobei die Computerprogrammcodeanweisungen konfiguriert sind, um bei Ausführung die Vorrichtung zu veranlassen:
auf eine vom Fahrzeug ausgegebene Sichtbarkeitsbenachrichtigung zu überwachen, wobei die Sichtbarkeitsbenachrichtigung der Sichtbarkeit der Umgebung um das Fahrzeug zugeordnet ist; und
als Reaktion auf das Erkennen der Sichtbarkeitsbenachrichtigung die Standortinformationen zu erhalten.

10. Computerimplementiertes Verfahren, umfassend:
Erhalten von Standortinformationen, die einen Standort eines Fahrzeugs angeben;
Erkennen, unter Verwendung einer Kartendatenbank, eines Objekts in der Nähe des Standorts des Fahrzeugs basierend auf den Standortinformationen;
Erfassen mindestens eines Bildes über mindestens einen Bildaufnahmesensor, mit dem das Fahrzeug ausgestattet ist, derart, dass das mindestens eine Bild eine auf das Objekt gerichtete Ansicht angibt;
Bestimmen von Sichtbarkeitsinformationen, die eine Sichtbarkeit einer Umgebung um das Fahrzeug herum angeben, basierend auf dem mindestens einen Bild; und
Ausgeben der Sichtbarkeitsinformationen;
wobei das Objekt ein erstes Objekt ist und wobei das Erkennen umfasst:
Bestimmen, unter Verwendung der Kartendatenbank, eines innerhalb einer ersten Kachelebene aufgenommenen Bereichs basierend auf den Standortinformationen, wobei der innerhalb der ersten Kachelebene aufgenommene Bereich den Standort des Fahrzeugs einschließt;
Bewerten des innerhalb der ersten Kachelebene aufgenommenen Bereichs, um mindestens ein Objekt innerhalb des innerhalb der ersten Kachelebene aufgenommenen Bereichs zu identifizieren; und
als Reaktion darauf, dass der innerhalb der ersten Kachelebene aufgenommene Bereich das mindestens eine Objekt innerhalb des innerhalb der ersten Kachelebene aufgenommenen Bereichs einschließt, Definieren eines Objekts innerhalb des innerhalb der ersten Kachelebene aufgenommenen Bereichs, das sich in der Nähe des Standorts befindet, als das erste Objekt; wobei das Erkennen als Reaktion darauf, dass der innerhalb der ersten Kachelebene aufgenommene Bereich jegliches Objekt ausschließt, umfasst:
Bestimmen, unter Verwendung der Kartendatenbank, eines innerhalb einer zweiten Kachelebene aufgenommenen Bereichs basierend auf den Standortinformationen, wobei der innerhalb der zweiten Kachelebene aufgenommene Bereich den Standort des Fahrzeugs einschließt;
Bewerten des innerhalb der zweiten Kachelebene aufgenommenen Bereichs, um mindestens ein Objekt innerhalb des innerhalb der zweiten Kachelebene aufgenommenen Bereichs zu identifizieren; und
als Reaktion darauf, dass der innerhalb der zweiten Kachelebene aufgenommene Bereich das mindestens eine Objekt einschließt, Definieren eines Objekts innerhalb des innerhalb der zweiten Kachelebene aufgenommenen Bereichs, das sich in der Nähe des Standorts befindet, als das erste Objekt.

11. Verfahren nach Anspruch 10, wobei das Objekt eine Straßenmarkierung, ein Straßenobjekt, eine Ampel, ein Strommast, eine Werbestruktur, eine Gebäudestruktur oder ein Verkehrsschild ist und wobei die Sichtbarkeitsinformationen die Sichtbarkeit des Objekts vom Fahrzeug aus angeben.

12. Nichtflüchtiges computerlesbares Speicherungsmedium mit darin gespeicherten Computerprogrammcodeanweisungen, wobei die Computerprogrammcodeanweisungen bei Ausführung durch mindestens einen Prozessor den mindestens einen Prozessor veranlassen:
Standortinformationen, die einen Standort eines Fahrzeugs angeben, zu erhalten;
basierend auf den Standortinformationen, unter Verwendung einer Kartendatenbank, einen Straßenabschnitt zu erkennen, der eine Straßenattributanforderung in der Nähe des Standorts erfüllt;
aus der Kartendatenbank mindestens ein Attribut, das dem Straßenabschnitt zugeordnet ist, zu erhalten;
basierend auf dem mindestens einen Straßenattribut eine Position des Fahrzeugs in Bezug auf den Straßenabschnitt zu bestimmen;
basierend auf der Position mindestens ein Bild über mindestens einen Bildaufnahmesensor, mit dem das Fahrzeug ausgestattet ist, zu erfassen;
basierend auf dem mindestens einen Bild Sichtbarkeitsinformationen, die eine Sichtbarkeit einer Umgebung um das Fahrzeug angeben, zu bestimmen und
die Sichtbarkeitsinformationen auszugeben;
wobei der Straßenabschnitt ein erster Straßenabschnitt ist und wobei, um den ersten Straßenabschnitt zu erkennen, die Computerprogrammcodeanweisungen konfiguriert sind, um bei Ausführung die Vorrichtung zu veranlassen:
basierend auf den Standortinformationen, unter Verwendung der Kartendatenbank, einen innerhalb einer ersten Kachelebene aufgenommenen Bereich zu bestimmen, wobei der innerhalb der ersten Kachelebene aufgenommene Bereich den Standort des Fahrzeugs einschließt;
einen Satz von Straßenabschnitten innerhalb des Bereichs, der innerhalb der ersten Kachelebene aufgenommen ist, zu bestimmen;
ein erstes Attribut jedes Straßenabschnitts des Satzes von Straßenabschnitten zu bestimmen;
das erste Attribut jedes Straßenabschnitts des Satzes von Straßenabschnitten mit der Straßenattributanforderung zu bewerten und
als Reaktion darauf, dass der Satz von Straßenabschnitten mindestens einen Straßenabschnitt einschließt, der die Straßenattributanforderung erfüllt, einen Straßenabschnitt aus dem Satz von Straßenabschnitten, der die Straßenattributanforderung erfüllt und dem Standort am nächsten ist, als den ersten Straßenabschnitt zu definieren;
wobei der Satz von Straßenabschnitten ein erster Satz von Straßenabschnitten ist und wobei, um den ersten Straßenabschnitt zu erkennen, die Computerprogrammcodeanweisungen konfiguriert sind, um bei Ausführung, als Reaktion darauf, dass jeder Straßenabschnitt des ersten Satzes von Straßenabschnitten die Straßenattributanforderung nicht erfüllt, die Vorrichtung zu veranlassen:
basierend auf den Standortinformationen, unter Verwendung der Kartendatenbank, einen innerhalb einer zweiten Kachelebene aufgenommenen Bereich zu bestimmen, wobei eine Auflösung der ersten Kachelebene größer als eine Auflösung der zweiten Kachelebene ist;
einen zweiten Satz von Straßenabschnitten innerhalb des innerhalb der zweiten Kachelebene aufgenommenen Bereichs zu bestimmen;
das erste Attribut jedes Straßenabschnitts des zweiten Satzes von Straßenabschnitten zu bestimmen;
das erste Attribut jedes Straßenabschnitts des zweiten Satzes von Straßenabschnitten mit der Straßenattributanforderung zu bewerten und
als Reaktion darauf, dass der zweite Satz von Straßenabschnitten mindestens einen Straßenabschnitt einschließt, der die Straßenattributanforderung erfüllt, einen Straßenabschnitt aus dem zweiten Satz von Straßenabschnitten, der die Straßenattributanforderung erfüllt und dem Standort am nächsten ist, als den ersten Straßenabschnitt zu definieren.

## Revendications

1. Appareil comprenant au moins un processeur et au moins une mémoire non transitoire comportant des instructions de code de programme d'ordinateur, les instructions de code de programme d'ordinateur étant configurées, lorsqu'elles sont exécutées, pour amener l'appareil à :
obtenir des informations de localisation indiquant un emplacement d'un véhicule ;
détecter, à l'aide d'une base de données cartographique, un segment de route satisfaisant à une exigence d'attribut de route à proximité de l'emplacement sur la base des informations de localisation ;
obtenir, à partir de la base de données cartographique, au moins un attribut associé au segment de route ;
déterminer une position du véhicule par rapport au segment de route sur la base de l'au moins un attribut de route ;
acquérir au moins une image par le biais d'au moins un capteur de capture d'image dont est équipé le véhicule sur la base de la position ;
déterminer des informations de visibilité indiquant la visibilité d'un environnement autour du véhicule sur la base de l'au moins une image ; et
fournir en sortie les informations de visibilité ;
dans lequel le segment de route est un premier segment de route, et dans lequel, pour détecter le premier segment de route, les instructions de code de programme d'ordinateur sont configurées pour, lorsqu'elles sont exécutées, amener l'appareil à :
déterminer, à l'aide de la base de données cartographique, une zone capturée dans un premier niveau de tuile sur la base des informations de localisation, dans lequel la zone capturée dans le premier niveau de tuile comporte l'emplacement du véhicule ;
déterminer un ensemble de segments de route dans la zone capturée dans le premier niveau de tuile ;
déterminer un premier attribut de chaque segment de route de l'ensemble de segments de route ;
évaluer le premier attribut de chaque segment de route de l'ensemble de segments de route avec l'exigence d'attribut de route ; et
en réponse au fait que l'ensemble de segments de route comporte au moins un segment de route qui satisfait à l'exigence d'attribut de route, définir un segment de route parmi l'ensemble de segments de route qui satisfait à l'exigence d'attribut de route et qui est le plus proche de l'emplacement en tant que premier segment de route ;
dans lequel l'ensemble de segments de route est un premier ensemble de segments de route, et dans lequel, pour détecter le premier segment de route, les instructions de code de programme d'ordinateur sont configurées pour, lorsqu'elles sont exécutées, amener l'appareil à, en réponse au fait que chaque segment de route du premier ensemble de segments de route ne satisfait pas à l'exigence d'attribut de route :
déterminer, à l'aide de la base de données cartographique, une zone capturée dans un second niveau de tuile sur la base des informations de localisation, dans lequel une résolution du premier niveau de tuile est supérieure à une résolution du second niveau de tuile ;
déterminer un second ensemble de segments de route dans la zone capturée dans le second niveau de tuile ;
déterminer le premier attribut de chaque segment de route du second ensemble de segments de route ;
évaluer le premier attribut de chaque segment de route du second ensemble de segments de route avec l'exigence d'attribut de route ; et
en réponse au fait que le second ensemble de segments de route comporte au moins un segment de route qui satisfait à l'exigence d'attribut de route, définir un segment de route parmi le second ensemble de segments de route qui satisfait à l'exigence d'attribut de route et qui est le plus proche de l'emplacement en tant que premier segment de route.

2. Appareil selon la revendication 1, dans lequel le premier attribut est une largeur de route, et dans lequel l'exigence d'attribut de route requiert une largeur de route comprise entre une première largeur et une seconde largeur.

3. Appareil selon la revendication 1, dans lequel l'au moins un attribut correspond à une largeur du segment de route, à un ensemble de voies dans le segment de route, à une largeur de chaque voie de l'ensemble de voies, à une présence d'un séparateur physique dans le segment de route, à une largeur du séparateur physique, ou à une combinaison de ceux-ci.

4. Appareil selon la revendication 1, dans lequel, pour acquérir l'au moins une image, les instructions de code de programme d'ordinateur sont configurées pour, lorsqu'elles sont exécutées, amener l'appareil à :
déterminer une première distance entre un premier bord du segment de route et le véhicule sur la base de la position du véhicule par rapport au segment de route ;
déterminer une seconde distance entre un second bord du segment de route et le véhicule sur la base de la position du véhicule par rapport au segment de route, dans lequel le second bord est opposé au premier bord ;
comparer la première distance avec la seconde distance ;
en réponse au fait que la première distance est supérieure à la seconde distance, acquérir l'au moins une image par le biais de l'au moins un capteur de capture d'image de manière que l'au moins une image indique une vue dirigée vers le premier bord ; et
en réponse au fait que la seconde distance est supérieure à la première distance, acquérir l'au moins une image par le biais de l'au moins un capteur de capture d'image de manière que l'au moins une image indique une vue dirigée vers le second bord.

5. Appareil selon la revendication 1, dans lequel les instructions de code de programme d'ordinateur sont configurées pour, lorsqu'elles sont exécutées, amener l'appareil à effectuer une mise en correspondance cartographique au niveau de la voie pour déterminer la position du véhicule par rapport au segment de route sur la base de l'au moins un attribut de route.

6. Appareil selon la revendication 1, dans lequel les instructions de code de programme d'ordinateur sont configurées pour, lorsqu'elles sont exécutées, amener l'appareil à :
(i) fournir en sortie les informations de visibilité sur une interface utilisateur ;
(ii) mettre à jour une couche cartographique stockée dans la base de données cartographique pour indiquer les informations de visibilité ;
(iii) sur la base des informations de visibilité, amener le véhicule à commander au moins une fonction liée au véhicule ; ou
(iv) une combinaison de ceux-ci.

7. Appareil selon la revendication 1, dans lequel, pour déterminer les informations de visibilité, les instructions de code de programme d'ordinateur sont configurées pour, lorsqu'elles sont exécutées, amener l'appareil à :
appliquer un modèle d'apprentissage automatique (ML) sur l'au moins une image ; et
déterminer les informations de visibilité sur la base d'une sortie du modèle ML, dans lequel le modèle ML est entraîné à détecter un bord du segment de route dans l'au moins une image.

8. Appareil selon la revendication 7, dans lequel les informations de visibilité indiquent une visibilité jusqu'à une distance prédéterminée du véhicule.

9. Appareil selon la revendication 1, dans lequel les instructions de code de programme d'ordinateur sont configurées pour, lorsqu'elles sont exécutées, amener l'appareil à :
surveiller une notification de visibilité fournie en sortie par le véhicule, dans lequel la notification de visibilité est associée à la visibilité de l'environnement autour du véhicule ; et
en réponse à la détection de la notification de visibilité, obtenir les informations de localisation.

10. Procédé mis en œuvre par ordinateur comprenant :
l'obtention d'informations de localisation indiquant un emplacement d'un véhicule ;
la détection, au moyen d'une base de données cartographique, d'un objet à proximité de l'emplacement du véhicule sur la base des informations de localisation ;
l'acquisition d'au moins une image par le biais d'au moins un capteur de capture d'image dont est équipé le véhicule de manière que l'au moins une image indique une vue dirigée vers l'objet ;
la détermination d'informations de visibilité indiquant la visibilité d'un environnement autour du véhicule sur la base de l'au moins une image ; et
la fourniture en sortie des informations de visibilité ;
dans lequel l'objet est un premier objet, et dans lequel la détection comprend :
la détermination, à l'aide de la base de données cartographique, d'une zone capturée dans un premier niveau de tuile sur la base des informations de localisation, dans lequel la zone capturée dans le premier niveau de tuile comporte l'emplacement du véhicule ;
l'évaluation de la zone capturée dans le premier niveau de tuile pour identifier au moins un objet dans la zone capturée dans le premier niveau de tuile ; et
en réponse au fait que la zone capturée dans le premier niveau de tuile comporte l'au moins un objet dans la zone capturée dans le premier niveau de tuile, la définition d'un objet dans la zone capturée dans le premier niveau de tuile qui est à proximité de l'emplacement en tant que premier objet ; dans lequel la détection comprend, en réponse au fait que la zone capturée dans le premier niveau de tuile exclut tout objet :
la détermination, à l'aide de la base de données cartographique, d'une zone capturée dans un second niveau de tuile sur la base des informations de localisation, dans lequel la zone capturée dans le second niveau de tuile comporte l'emplacement du véhicule ;
l'évaluation de la zone capturée dans le second niveau de tuile pour identifier au moins un objet dans la zone capturée dans le second niveau de tuile ; et
en réponse au fait que la zone capturée dans le second niveau de tuile comportant l'au moins un objet, la définition d'un objet dans la zone capturée dans le second niveau de tuile qui est à proximité de l'emplacement en tant que premier objet.

11. Procédé selon la revendication 10, dans lequel l'objet est un marquage routier, un objet routier, un feu de circulation, un poteau de service public, une structure publicitaire, une structure de bâtiment, ou un panneau de signalisation routière, et dans lequel les informations de visibilité indiquent la visibilité de l'objet depuis le véhicule.

12. Support de stockage non transitoire lisible par un ordinateur sur lequel sont stockées des instructions de code de programme d'ordinateur, les instructions de code de programme d'ordinateur, lorsqu'elles sont exécutées par au moins un processeur, amènent l'au moins un processeur à :
obtenir des informations de localisation indiquant un emplacement d'un véhicule ;
détecter, à l'aide d'une base de données cartographique, un segment de route satisfaisant à une exigence d'attribut de route à proximité de l'emplacement sur la base des informations de localisation ;
obtenir, à partir de la base de données cartographique, au moins un attribut associé au segment de route ;
déterminer une position du véhicule par rapport au segment de route sur la base de l'au moins un attribut de route ;
acquérir au moins une image par le biais d'au moins un capteur de capture d'image dont est équipé le véhicule sur la base de la position ;
déterminer des informations de visibilité indiquant la visibilité d'un environnement autour du véhicule sur la base de l'au moins une image ; et
fournir en sortie les informations de visibilité ;
dans lequel le segment de route est un premier segment de route, et dans lequel, pour détecter le premier segment de route, les instructions de code de programme d'ordinateur sont configurées pour, lorsqu'elles sont exécutées, amener l'appareil à :
déterminer, à l'aide de la base de données cartographique, une zone capturée dans un premier niveau de tuile sur la base des informations de localisation, dans lequel la zone capturée dans le premier niveau de tuile comporte l'emplacement du véhicule ;
déterminer un ensemble de segments de route dans la zone capturée dans le premier niveau de tuile ;
déterminer un premier attribut de chaque segment de route de l'ensemble de segments de route ;
évaluer le premier attribut de chaque segment de route de l'ensemble de segments de route avec l'exigence d'attribut de route ; et
en réponse au fait que l'ensemble de segments de route comporte au moins un segment de route qui satisfait à l'exigence d'attribut de route, définir un segment de route parmi l'ensemble de segments de route qui satisfait à l'exigence d'attribut de route et qui est le plus proche de l'emplacement en tant que premier segment de route ;
dans lequel l'ensemble de segments de route est un premier ensemble de segments de route, et dans lequel, pour détecter le premier segment de route, les instructions de code de programme d'ordinateur sont configurées pour, lorsqu'elles sont exécutées, amener l'appareil à, en réponse au fait que chaque segment de route du premier ensemble de segments de route ne satisfait pas à l'exigence d'attribut de route :
déterminer, à l'aide de la base de données cartographique, une zone capturée dans un second niveau de tuile sur la base des informations de localisation, dans lequel une résolution du premier niveau de tuile est supérieure à une résolution du second niveau de tuile ;
déterminer un second ensemble de segments de route dans la zone capturée dans le second niveau de tuile ;
déterminer le premier attribut de chaque segment de route du second ensemble de segments de route ;
évaluer le premier attribut de chaque segment de route du second ensemble de segments de route avec l'exigence d'attribut de route ; et
en réponse au fait que le second ensemble de segments de route comporte au moins un segment de route qui satisfait à l'exigence d'attribut de route, définir un segment de route parmi le second ensemble de segments de route qui satisfait à l'exigence d'attribut de route et qui est le plus proche de l'emplacement en tant que premier segment de route.
